# EUROPEAN PATENT APPLICATION

(11) **EP 3 056 332 A1**
(43) Date of publication of application: **17.08.2016**
(21) Application number: 16155408.4
(22) Date of filing: 12.02.2016
(51) Int. Cl.: B29C 67/00, B41J 19/20, B41J 2/15, B41J 3/407

(54) **LIQUID DISCHARGE APPARATUS AND LIQUID DISCHARGE METHOD**

(30) Priority: 13.02.2015 JP 2015026330
(71) Applicant: Mimaki Engineering Co., Ltd., Tomi-City, Nagano 389-0512 (JP)
(72) Inventor: Ohnishi, Masaru, Tomi-city, Nagano 389-0512 (JP)
(74) Representative: Hinkelmann, Klaus

(57) **Abstract**

The apparatus includes: a head unit, a main scan driver, and a controller. The head unit has a plurality of nozzle arrays disposed next to one another in a main scanning direction and positions of nozzles in each of the nozzle arrays differ in an orthogonal direction from positions of the nozzles in other nozzle arrays. The controller is configured to set a two-dimensional printing mode and an object shaping mode. The main scan driver regulates a moving speed to a preset first speed and prompts the head unit to perform the main scan at the first speed when the apparatus is in the two-dimensional printing mode and regulates the moving speed at least at a certain timing to a second speed lower than the first speed and prompts the head unit to perform the main scan at the second speed when the apparatus is in the object shaping mode.

## Description

### CROSS REFERENCE TO RELATED APPLICATIONS

This application claims the priority benefit of Japanese Patent Application No. 2015-026330, filed on February 13, 2015. The entirety of the above-mentioned patent application is hereby incorporated by reference herein and made a part of this specification.

### TECHNICAL FIELD

This disclosure relates to a liquid discharge apparatus and a liquid discharge method.

### DESCRIPTION OF THE BACKGROUND ART

In recent years, there is ongoing development of 3D printers designed to form three-dimensional objects. Also, it is being discussed, as an alternative of methods for forming three-dimensional objects, to leverage the technology of known ink jet printers used for color printing of two-dimensional images (for example, refer to the patent document 1). In this instance, ink jet printers (UV printers) may be usable that print objects with inks of ultraviolet curing type (UV inks) (for example, refer to Patent Document 1).
Patent Document 1: JP 2005-262570 A

### SUMMARY

In order to form a three-dimensional object by leveraging the technology of ink jet printers, one printer should desirably be capable of shaping three-dimensional objects and printing color two-dimensional images. However, ink jet printers for color printing of two-dimensional images and 3D printers for shaping monochrome objects have so far been separately developed. Because of the history, many of the technical aspects so far deemed to be desirable for ink jet printers and 3D printers are, in fact, inconsistent.

The differences between the technical aspects of these printers are specifically described. For color printing, the known ink jet printers use several ink jet heads for different color inks of, for example, Y (yellow), M (magenta), C (cyan), and K (black). Conventionally, nozzles in each of the ink jet heads for different colors are positionally collinear with nozzles in the other ink jet heads in a main scanning direction (Y direction) in which the ink jet heads are moved during main scans (scanning operation).

On the other hand, the 3D printers use, for example, two types of inks; object shaping ink, and support ink. The support ink is intended for use in forming support layers that are ink layers to support a three-dimensional object (structure) shaped with the object shaping ink. The support ink may be selected from water-soluble inks of ultraviolet curing type (UV inks).

A three-dimensional object shaping apparatus such as 3D printer, if equipped with the conventional ink jet heads as exactly as in the known ink jet printers to discharge ink droplets of the object shaping ink, may likely to result in a continuity of ink dots in the main scanning direction, causing streak-like irregularity (mottles) on the shaped three-dimensional object. When, for example, forming a three-dimensional object using such ink jet heads and an ink of ultraviolet curing type, ink dots may continue into one another in the main scanning direction before being irradiated with ultraviolet light, possibly causing streak-like irregularity.

In order to solve the problem, it has been long expected to develop an apparatus suitably configured for both of operations to print two-dimensional images and to shape three-dimensional objects. This disclosure provides a liquid discharge apparatus and a liquid discharge method by which the conventional problem may be solvable.

As described earlier, the 3D printers use the object shaping ink and the support ink to form a three-dimensional object. In that sense, the object shaping ink and the support ink may be collectively referred to as an object shaping ink. For the sake of simplicity, the structural and technical aspects of a 3D printer and its operation are described with a focus on the object shaping ink used as the material of a three-dimensional object to be shaped. Unless stated otherwise or obvious from different ink applications, the description below to the object shaping ink is entirely or mostly applicable to the support ink.

### SOLUTIONS TO THE PROBLEMS

In connection with three-dimensional object shaping apparatuses such as 3D printers, the inventors of this application, to start with, focused on the study of structural and technical aspects more desirable for the shaping of a three-dimensional object. Then, they contemplated alternative ways to non-collinearly dispose nozzles of different ink jet heads (or nozzle arrays) in the main scanning direction (Y direction) unlike the conventional ink jet heads. Thus disposing the nozzles otherwise may prevent a continuity of ink dots in the main scanning direction, thereby favorably avoiding the occurrence of streak-like irregularity. By preventing such a continuity of ink dots that may occur one-sidedly in the main scanning direction, ink layers may be more favorably flattened during the shaping of a three-dimensional object.

The inventors of this application, through their focused studies and researches, found out the use of non-collinear disposition of the ink jet heads could also improve the two-dimensional image printing as compared to the prior art. Specifically, the use of such non-collinearly disposed ink jet heads makes a continuity of ink dots in the main scanning direction more difficult to occur during the two-dimensional image printing as well. This may effectively control the occurrence of streak-like irregularity during the two-dimensional image printing.

In addition to the two-dimensional image printing and three-dimensional object shaping operations using identically structured ink jet heads, the inventors of this application further contemplated changing moving speeds of the ink jet heads during the main scan in accordance with operation modes. Specifically, they contemplated accelerating the moving speeds of the ink jet heads during the printing of a two-dimensional image, while decelerating the moving speeds during the shaping of a three-dimensional object. This may effectuate as high-speed printing of two-dimensional images as expected in the known ink jet printers, while effectuating high-precision shaping of three-dimensional objects. Further advantageously, the non-collinearly disposed ink jet heads may achieve even a higher three-dimensional object shaping speed as compared to the known three-dimensional object shaping apparatuses. This disclosure provides the following structural and technical aspects to solve the conventional problem.

### [Aspect 1]

A liquid discharge apparatus configured to discharge ink droplets by ink-jet technique, including: a head unit having a plurality of nozzle arrays from which the ink droplets are dischargeable by ink-jet technique; a main scan driver that prompts the head unit to perform a main scan in which the ink droplets are discharged while the head unit is moving in a predetermined main scanning direction; and a controller configured to control the operations of the head unit and the main scan driver, wherein the plurality of nozzle arrays each have a plurality of nozzles aligned in a nozzle array direction intersecting with the main scanning direction, the plurality of nozzle arrays are disposed next to one another in the main scanning direction in a manner that positions thereof at least partly overlap in an orthogonal direction orthogonal to the main scanning direction, positions of the nozzles in each of the nozzle arrays differ in the orthogonal direction from positions of the nozzles in the other nozzle arrays, the controller is further configured to set, as operation modes of the liquid discharge apparatus, at least a two-dimensional printing mode for printing an image on a flat print surface and an object shaping mode for shaping a three-dimensional object using an additive manufacturing method, the main scan driver regulates a moving speed in the main scanning direction to a preset first speed and prompts the head unit to perform the main scan at the first speed when the apparatus is set to be in the two-dimensional printing mode, and the main scan driver regulates the moving speed in the main scanning direction at least at a certain timing to a second speed lower than the first speed and prompts the head unit to perform the main scan at the second speed when the apparatus is set to be in the object shaping mode. The nozzle array direction may be a direction in parallel with the orthogonal direction.

According to this aspect, the nozzles of the nozzle arrays may be prevented from being collinearly positioned in the main scanning direction. This may prevent the ink dots from continuing into one another in the main scanning direction, thereby making the occurrence of streak-like irregularity unlikely.

This may enable high-precision printing to be appropriately performed when the apparatus is operating in the two-dimensional printing mode. A printing speed when a two-dimensional image is printed may depend on the number of disposed nozzle arrays and the number of printing passes. Comparing printing speeds under the same conditions, a printing speed according to this aspect is substantially equal to printing speeds of the known ink jet printers. Resultantly, the apparatus according to this aspect may attain higher printing quality without decelerating the printing speed.

Further advantageously, when the apparatus is set to be in the object shaping mode, ink layers may be more favorably flattened by preventing the ink dots from continuing into one another one-sidedly in the main scanning direction. This may enable high-precision shaping of a three-dimensional object to be appropriately performed.

According to this aspect, the moving speed of the head unit during the main scan may be regulatable suitably for the operation modes. When, for example, a printing speed as high as the printing speeds of the known ink jet printers is employed when the apparatus is operating in the two-dimensional printing mode, high-speed printing may be attainable that is comparable to the known ink jet printers.

When the apparatus is set to be in the object shaping mode, the moving speed of the head unit may be decelerated at least at a certain timing to a speed low enough for any part of the object to be shaped with higher precision. This may enable high-precision shaping of a three-dimensional object to be more appropriately performed.

According to this aspect, one liquid discharge apparatus may be suitably operable in both of the two-dimensional printing mode and the object shaping mode. Resultantly, an apparatus may be obtainable that is suitably configured for both of operations to print two-dimensional images and to shape three-dimensional objects.

When the apparatus is set to be in the object shaping mode, the moving speed of the head unit may be regulatable to a speed suitable for a degree of precision required to form end parts of the ink layers constituting a three-dimensional object. The ends part of the ink layer may be one end side and the other end side (front-end side and rear-end side) in the main scanning direction.

In the apparatus according to this aspect, the inks used in the nozzle arrays may be replaceable in accordance with the set operation mode. When the liquid discharge apparatus is operating in the two-dimensional printing mode, ink droplets of different color inks are discharged from respective ones of the nozzle arrays. Specifically, ink droplets of Y (yellow), M (magenta), C (cyan), and K (black) color inks may be discharged from respective ones of the nozzle arrays.

When the liquid discharge apparatus is operating in the object shaping mode, for example, the nozzle arrays may discharge ink droplets of an object shaping ink, wherein the nozzle arrays may preferably discharge the ink droplets of the same ink. The object shaping ink may be an ink for exclusive use in shaping an object. Other examples of the object shaping ink may include inks of predetermined colors such as white and clear inks.

### [Aspect 2]

When the apparatus is set to be in the object shaping mode, the main scan driver regulates the moving speed in the main scanning direction to the second speed at least at a timing of forming an end part on one side of the ink layer in the main scanning direction formed by each main scan.

When a three-dimensional object is shaped by the additive manufacturing method, higher precision is conventionally demanded at the timings of forming the end parts of the ink layers. According to this aspect wherein the moving speed of the head unit may be decelerated at the timings of forming the end parts of the ink layers, the end parts of the ink layers may be formed with higher precision.

The moving speed of the head unit throughout each main scan may be regulatable to the second speed depending on a degree of precision required to form the end parts of the ink layer. By thus performing the low-speed main scan for the whole surface, higher precision may be attainable during the shaping of a three-dimensional object.

The moving speed of the head unit may be decelerated only at a certain timing during the main scan. For example, the moving speed of the head unit may be lowered to the second speed only at timings of forming end parts on one end side and the other end side (front-end side and rear-end side) of the ink layer in the main scanning direction, in which case the head unit may be moved at a moving speed higher than the second speed at any other timings. By thus decelerating the moving speed of the head unit only at any timing necessary, the shaping of a three-dimensional object may be accelerated.

### [Aspect 3]

When the apparatus is set to be in the object shaping mode, the main scanning driver regulates the moving speed of the head unit in each main scan to stay at the constant second speed. By thus performing the low-speed main scan for the whole surface, higher precision may be attainable during the shaping of a three-dimensional object.

### [Aspect 4]

The plurality of nozzle arrays each discharge ink droplets of an ink of ultraviolet curing type curable by being irradiated with ultraviolet light. The liquid discharge apparatus may preferably further have an ultraviolet light source from which ultraviolet light is irradiated.

According to this aspect, the image printing may be appropriately performed during the two-dimensional printing mode, while the three-dimensional object shaping may be appropriately performed by the additive manufacturing method during the object shaping mode.

### [Aspect 5]

The plurality of nozzles in the plurality of nozzle arrays are spaced at constant intervals of p in the orthogonal direction, and the plurality of nozzle arrays are disposed next to one another in the main scanning direction so that a positional displacement in the orthogonal direction between end nozzles in adjacent ones of the nozzle arrays is represented by a distance equal to an integral multiple of p/n (n is an integral number greater than or equal to 2) but is unequal to an integral multiple of p. Assuming that N is the number of the plural nozzle arrays (N is an integral number greater than or equal to 2), the N is preferably greater than or equal to n.

According to this aspect, in respect of the whole nozzles of the nozzle arrays, a resolution in the orthogonal direction (X direction) corresponds to the distance p/n. The positional displacement between adjacent ones of the nozzle arrays in the orthogonal direction may be expressed as, for example, p/n.

When the apparatus is operating in the two-dimensional printing mode, multi-pass printing may suitably allow an image to be printed at a resolution corresponding to the distance p/n. This may enable high-definition printing to be appropriately performed.

When the apparatus is operating in the object shaping mode, a three-dimensional object may be appropriately shaped at a high resolution corresponding to a distance narrower than the nozzle interval (nozzle pitch) p in one nozzle array. This may enable high-precision shaping of a three-dimensional object to be more appropriately performed.

### [Aspect 6]

The controller is configured to further set, as the operation mode of the liquid discharge apparatus, a raised printing mode for forming a bulging portion in at least a part of a medium by discharging the ink droplets from the head unit on the medium, and the main scan driver regulates the moving speed in the main scanning direction at least at a certain timing to a third speed lower than the first speed and prompts the head unit to perform the main scan at the third speed when the apparatus is set to be in the raised printing mode.

According to this aspect, one liquid discharge apparatus may be capable of raised printing as well as the two-dimensional image printing and three-dimensional object shaping operations. The raised printing described herein may refer to printing performed in a manner that a flat medium appears to be partly rising upward. For instance, the raised printing may produce a printing result in which characters and/or patterns are formed in a manner that protrudes upward from a surface of the medium.

According to this aspect, when the apparatus is set to be in the raised printing mode, the moving speed of the head unit may be decelerated to a speed low enough for a degree of precision required to form end parts of ink layers (for example, front-end side and rear-end side) constituting a bulging region. This may enable high-precision raised printing to be appropriately performed. Accordingly, one liquid discharge apparatus may be diversely operable in more operation modes.

When the apparatus is set to be in the raised printing mode, the main scan driver may regulate the moving speed of the head unit in each main scan to stay at the constant third speed. This may enable the moving speed of the head unit to be regulated more easily and appropriately. When the apparatus is set to be in the raised printing mode, the main scan driver may decelerate the moving speed of the head unit to a lower speed only at a certain timing during the main scan. The main scan driver may regulate the moving speed in the main scanning direction to the third speed at least at a timing of forming an end part on one side of the ink layer in the main scanning direction formed by each main scan.

### [Aspect 7]

The controller is configured to further set, as the operation mode of the liquid discharge apparatus, a three-dimensional object decorative printing mode for printing an image on a three-dimensional medium with unevenness on a print surface thereof. According to this aspect, one liquid discharge apparatus may be further capable of decorating the three-dimensional medium. Accordingly, one liquid discharge apparatus may be further diversely operable in even more operation modes.

When the apparatus is set to be in the three-dimensional object decorative printing mode, the main scan driver may preferably regulate the moving speed in the main scanning direction at least at a certain timing to a fourth speed lower than the first speed and prompts the head unit to perform the main scan at the fourth speed. Further, the fourth speed may be preferably regulatable suitably for a peak value of a distance between the print surface and the head unit (gap length).

### [Aspect 8]

When the apparatus is set to be in the three-dimensional object decorative printing mode, the main scan driver changes the moving speed at which the head unit is moved in the main scanning direction during the main scan in accordance with a distance between the head unit and each position on the print surface of the three-dimensional medium.

In the inkjet printing, ink droplet landing positions may be more easily displaced with a larger gap length. With the gap length larger than expected, other conditions may be desirably adjusted to minimize any displacement of the ink droplet landing positions. An example of such conditions to be adjusted may include decelerating the moving speed of the head unit during the main scan.

By suitably changing the moving speed of the head unit during the main scan depending on the gap length, the ink droplets may successfully land with precision at any positions with larger gap lengths on the print surface. This may enable high-precision printing to be more appropriately performed when the apparatus is set to be in the three-dimensional object decorative printing mode.

The moving speed of the head unit may be regulatable to a lower speed with a larger gap length. Such changes of the moving speed of the head unit then may be successive changes or stepwise changes. This is, however, a non-limiting example, leaving other options such as selecting a speed suitable for the gap length from a plurality of preset multiple speeds.

### [Aspect 9]

When the apparatus is set to be in the three-dimensional object decorative printing mode, the main scan driver changes the moving speed at which the head unit is moved in the main scanning direction during the main scan based on a peak value of the distance between the head unit and each position on the print surface of the three-dimensional medium.

This may effectively prevent displacement of the ink droplet landing positions from a position on the print surface at which the gap length marks its peak. This may enable high-precision printing to be more appropriately performed when the apparatus is set to be in the three-dimensional object decorative printing mode.

### [Aspect 10]

When the apparatus is set to be in the object shaping mode, the head unit forms one ink layer by discharging in one main scan the ink droplets from the plurality of nozzle arrays. Forming one ink layer in one main scan may be rephrased as forming one ink layer in one pass. Forming one ink layer in one pass may be rephrased as forming at least the whole area of an island-like ink layer in one main scan during the shaping of a three-dimensional object.

The known ink jet printers are mostly configured to print two-dimensional images in multiple passes. Conventionally, multi-pass printing is employed for inks of ultraviolet curing type. The multi-pass printing may also be employed to print an object at a resolution higher than the nozzle pitch in one nozzle array or to necessarily suppress adverse effects resulting from the variability of nozzle discharge properties.

For high-speed shaping of a three-dimensional object, it may be desirable to form the ink layers constituting the three-dimensional object by one-pass printing instead of multi-pass printing. When the conventional ink jet heads are used, however, forming one ink layer in one pass may be difficult, failing to speedily shape the object.

Taking, for instance, the use of the nozzle arrays having the nozzles collinearly disposed in the main scan direction which are often employed in the known ink jet printers, a dot interval in the orthogonal direction (nozzle array direction) between ink dots formed in one pass is often vastly greater than one dot size (diameter). In this instance, one ink layer is difficult to form in one pass.

According to this aspect wherein positions of the nozzles in the nozzle arrays are displaced from one another in the orthogonal direction, one-pass formation of one ink layer may be facilitated. This may enable the shaping of a three-dimensional object to be more speedily performed.

### [Aspect 11]

In one main scan, the nozzles in the plurality of nozzle arrays respectively discharge the ink droplets to different positions, and the ink droplets are discharged from the plurality of nozzle arrays to all of target positions for the ink droplets to be discharged in order to form one ink layer in at least a region previously defined. This may enable one-pass formation of one ink layer to be appropriately performed when the apparatus is set to be in the object shaping mode.

All of the target positions for the ink droplets to be discharged may refer to all of positions decided based on a shaping resolution. Discharging the ink droplets from the nozzle arrays to all of the positions may be rephrased as discharge of the ink droplets from the nozzle arrays so that the concentrations of the discharged ink droplets add up to 100%. The 100% concentration may refer to a total concentration of the ink droplets discharged to all of the discharge target positions spaced at intervals suitable for a shaping resolution.

The previously defined region may refer to a region predefined in accordance with a three-dimensional object to be shaped. This region may be a region in which the island-like ink layers should be formed.

### [Aspect 12]

When the apparatus is set to be in the object shaping mode, the head unit forms one ink layer by discharging in each of a plurality of main scans the ink droplets from the plurality of nozzle arrays. This may enable high-precision formation of the ink layers to be appropriately performed.

Forming one ink layer over the course of plural main scans may be rephrased as forming one ink layer in multiple passes. The multi-pass technique in shaping a three-dimensional object may refer to discharge of the ink droplets over the course of plural main scans to all of target positions for the ink droplets to be discharged in order to form one ink layer.

### [Aspect 13]

When the apparatus is set to be in the two-dimensional printing mode, multi-pass printing is performed by means of the plurality of nozzle arrays. This may enable high-precision printing to be appropriately performed when the apparatus is set to be in the two-dimensional printing mode.

### [Aspect 14]

The head unit has a plurality of nozzle arrays that respectively discharge ink droplets of an object shaping ink used as a material ink to form a three-dimensional object when the apparatus is set to be in the object shaping mode. This may enable the shaping of a three-dimensional object to be appropriately performed when the apparatus is set to be in the object shaping mode.

### [Aspect 15]

The head unit has a plurality of nozzle arrays that respectively discharge the ink droplets of a support ink used as a material ink to form support layers that circumferentially support a three-dimensional object currently being shaped when the apparatus is set to be in the object shaping mode. This may enable the support layers to be appropriately formed when the apparatus is set to be in the object shaping mode.

The head unit may have a plurality of sets of nozzle arrays, each of the sets consisting of a predetermined number of nozzle arrays (for example, four nozzle arrays), wherein the head unit may preferably has at least a set of nozzle arrays for the object shaping ink and at least a set of nozzle arrays for the support ink. Providing a set of nozzle arrays may refer to providing the ink jet heads as many as a set of nozzle arrays (a set of ink jet heads).

### [Aspect 16]

A liquid discharge method for discharging ink droplets by ink-jet technique, including prompting a head unit having a plurality of nozzle arrays from which the ink droplets are dischargeable by ink-jet technique to perform a main scan in which the ink droplets are discharged while the head unit is moving in a predetermined main scanning direction, wherein the plurality of nozzle arrays each have a plurality of nozzles aligned in a nozzle array direction intersecting with the main scanning direction, the plurality of nozzle arrays are disposed next to one another in the main scanning direction in a manner that positions thereof at least partly overlap in an orthogonal direction orthogonal to the main scanning direction, positions of the nozzles in each of the nozzle arrays differ in the orthogonal direction from positions of the nozzles in the other nozzle arrays, the method further comprising: setting one of operation modes when the head unit is prompted to perform the main scan, the operation modes including at least a two-dimensional printing mode for printing an image on a flat print surface and an object shaping mode for forming a three-dimensional object using an additive manufacturing method; regulating a moving speed in the main scanning direction to a preset first speed and prompting the head unit to perform the main scan at the first speed when the apparatus is set to be in the two-dimensional printing mode; and regulating the moving speed in the main scanning direction at least at a certain timing to a second speed lower than the first speed and prompting the head unit to perform the main scan at the second speed when the apparatus is set to be in the object shaping mode. The method according to this aspect may offer the same advantages as effectuated by the aspect 1.

As disclosed herein, an apparatus may be obtainable that is suitably configured for both of operations to print two-dimensional images and to shape three-dimensional objects.

### BRIEF DESCRIPTION OF THE DRAWINGS

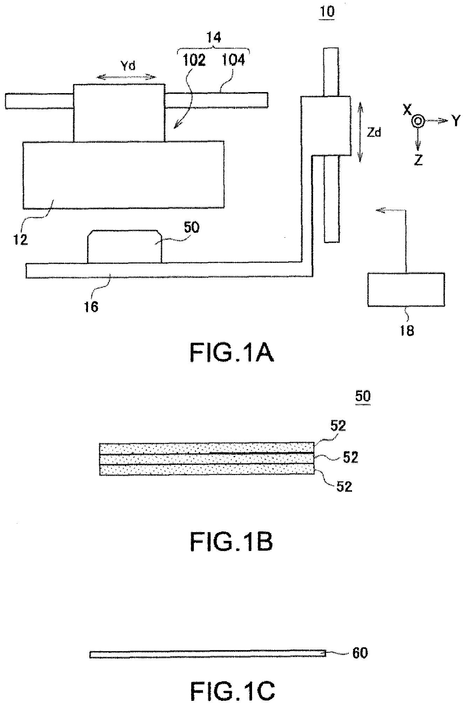

FIGs. 1A to 1C are drawings of an exemplified three-dimensional object shaping apparatus 10 according to an embodiment of this disclosure. FIG. 1A is a drawing of exemplified structural elements in the three-dimensional object shaping apparatus 10. FIG. 1B is a drawing of an exemplified three-dimensional object 50 shaped by the three-dimensional object shaping apparatus 10. FIG. 1C is an explanatory drawing of an operation during a two-dimensional printing mode.

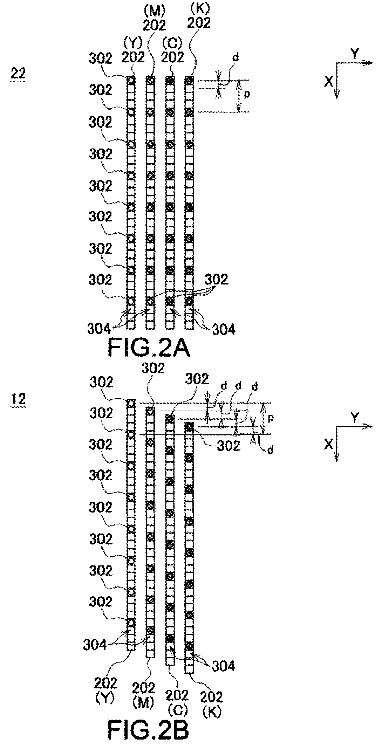

FIGs. 2A to 2B are drawings illustrating comparison of an exemplified aspect of a head unit 12 to a conventional head unit 22. FIG. 2A is a drawing of an exemplified aspect of the conventional head unit 22. FIG. 2B is a drawing of an exemplified aspect of the head unit 12 according to this disclosure.

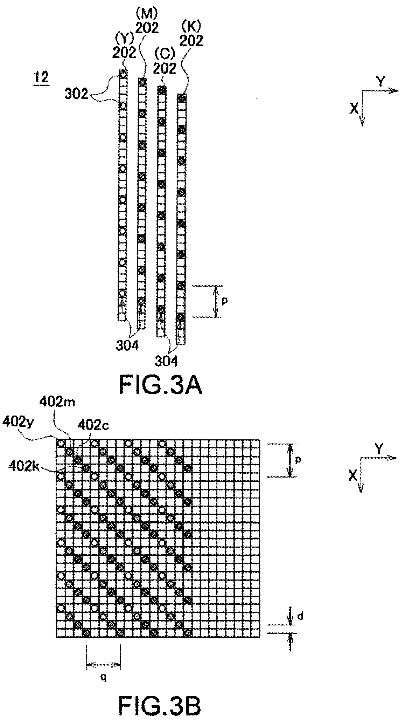

FIGs. 3A to 3B are explanatory drawings of an operation to print a two-dimensional image using the head unit 12. FIG. 3A is a drawing of an exemplified aspect of the head unit 12. FIG. 3B is an enlarged view of exemplified target positions for ink droplets to be discharged from nozzle arrays of ink jet heads 202 in each main scan.

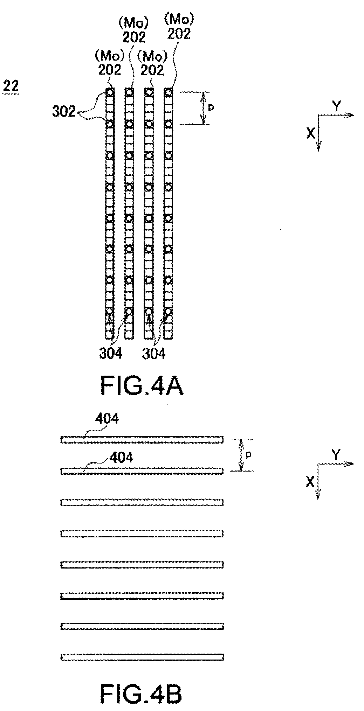

FIGs. 4A to 4B are drawings of an exemplified operation to shape a three-dimensional object using the conventional head unit 22. FIG. 4A is a drawing of an exemplified aspect of the head unit 22. FIG. 4B is a drawing of a state subsequent to one main scan performed by the conventional head unit 22.

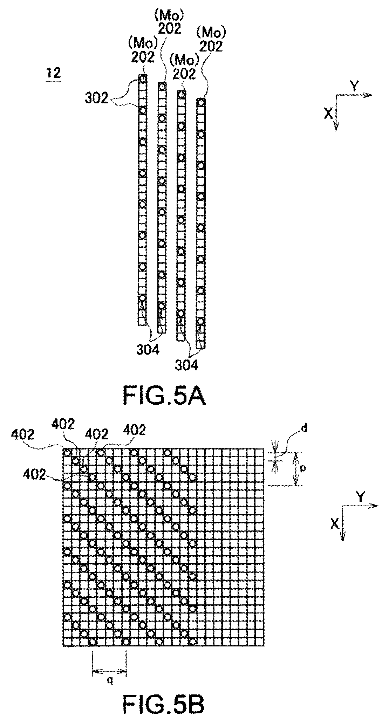

FIGs. 5A to 5B are drawings of an exemplified operation to shape a three-dimensional object using the head unit 12. FIG. 5A is a drawing of an exemplified aspect of the head unit 12. FIG. 5B is a drawing of a state subsequent to one main scan performed by the head unit 12.

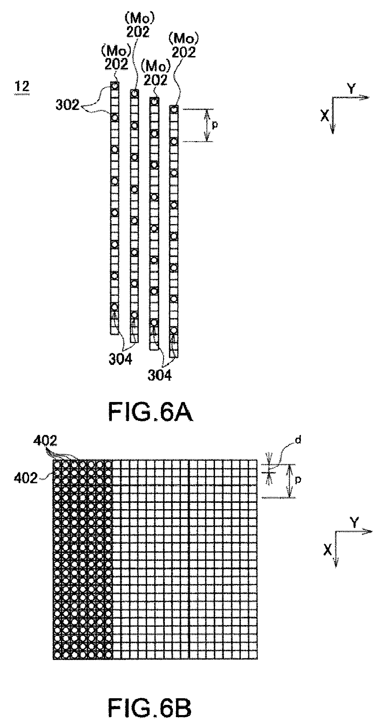

FIGs. 6A to 6B are drawings of another exemplified operation to shape a three-dimensional object using the head unit 12. FIG. 6A is a drawing of an exemplified aspect of the head unit 12. FIG. 6B is a drawing of a state subsequent to one main scan performed by the head unit 12.

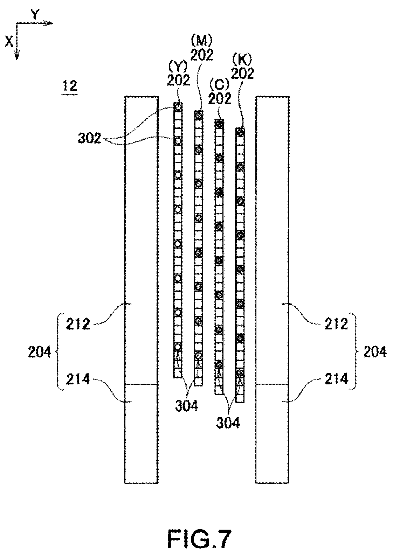

FIG. 7 is a drawing of an exemplified aspect of the head unit 12 illustrated in more detail.

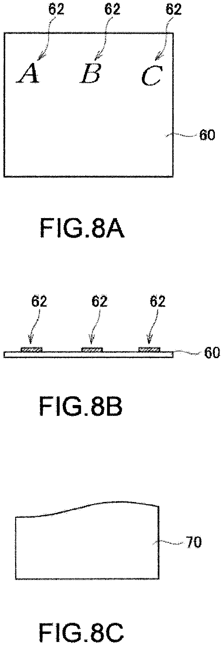

FIGs. 8A to 8C are explanatory drawings of a raised printing mode and a three-dimensional object decorative printing mode. FIGs. 8A and 8B are explanatory drawings of the raised printing mode. FIG. 8C is an explanatory drawing of the three-dimensional object decorative printing mode.

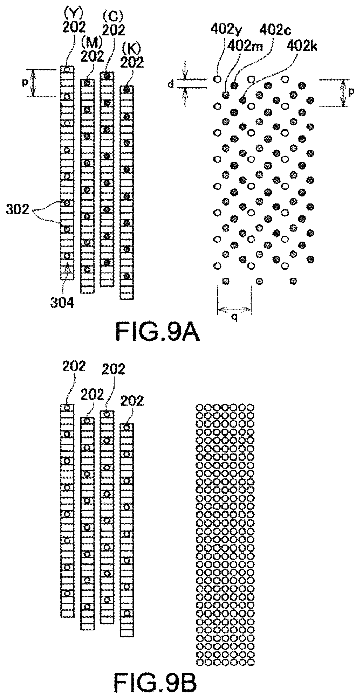

FIGs. 9A to 9B are drawings of a modified example of the head unit 12. FIG. 9A is a drawing of an exemplified operation during the two-dimensional printing mode according to the modified example. FIG. 9B is a drawing of an exemplified operation during an object shaping mode according to the modified example.

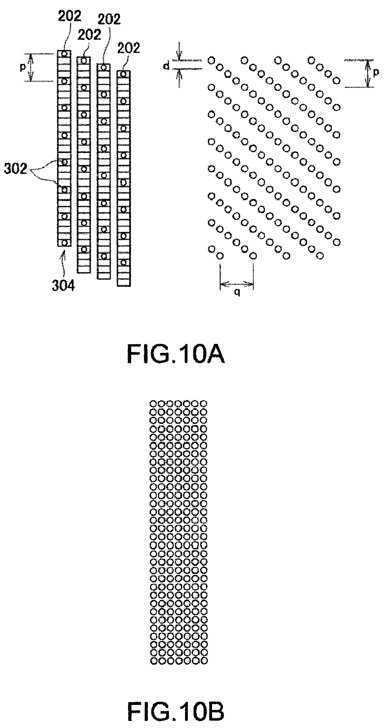

FIGs. 10A to 10B are drawings of another modified example of the head unit 12. FIG. 10A is a drawing of an exemplified disposition of the ink jet heads 202 according to the another modified example. FIG. 10B is an exemplified arrangement of ink dots subsequent to four main scans performed correspondingly to the number of printing passes.

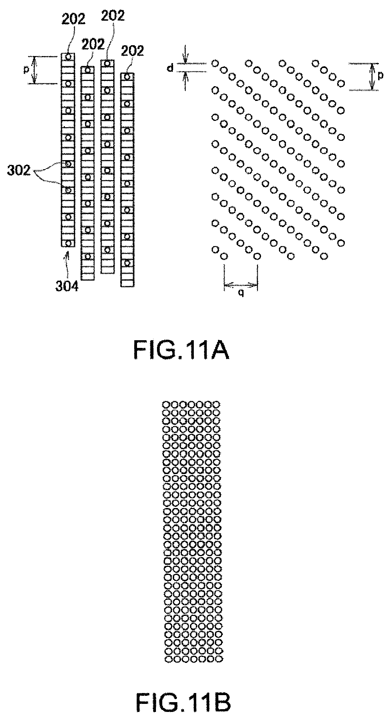

FIGs. 11A to 11B are drawings of yet another modified example of the head unit 12. FIG. 11A is an exemplified disposition of the ink jet heads 202 according to the yet another modified example. FIG. 11B is an exemplified arrangement of ink dots subsequent to four main scans performed correspondingly to the number of printing passes.

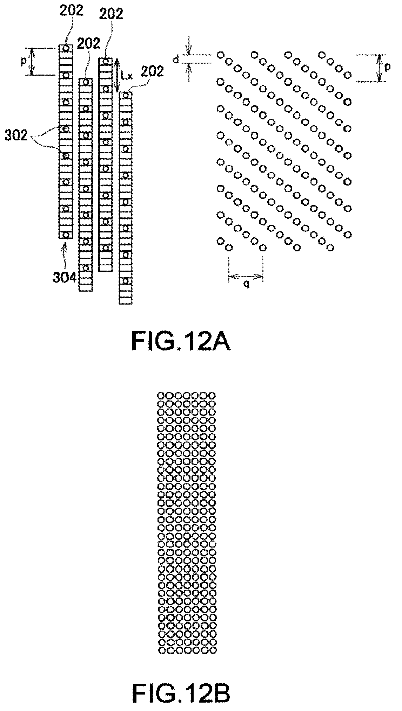

FIGs. 12A to 12B are drawings of yet another modified example of the head unit 12. FIG. 12A is an exemplified disposition of the ink jet heads 202 according to the yet another modified example. FIG. 12B is an exemplified arrangement of ink dots subsequent to four main scans performed correspondingly to the number of printing passes.

### EMBODIMENT OF THE DISCLOSURE

Hereinafter, an embodiment of this disclosure is described in detail referring to the accompanying drawings. FIGs. 1A to 1C are drawings of an exemplified three-dimensional object shaping apparatus 10 according to an embodiment disclosed herein. FIG. 1A is a drawing of exemplified structural elements in the three-dimensional object shaping apparatus 10. FIG. 1B is a drawing of an exemplified three-dimensional object 50 shaped by the three-dimensional object shaping apparatus 10, schematically illustrating the three-dimensional object 50 currently being shaped.

The three-dimensional object shaping apparatus 10 described herein shapes the three-dimensional object 50 by means of an additive manufacturing method. The additive manufacturing method refers to a method for shaping the three-dimensional object 50 by stacking on one another a plurality of layers. The three-dimensional object 50 refers to an object having a three-dimensionally formed structure. The three-dimensional object shaping method disclosed herein may be rephrased as a three-dimensional object manufacturing method.

Any structural elements and features of the three-dimensional object shaping apparatus 10 but the ones hereinafter described may be identical or similar to those of any conventional three-dimensional object shaping apparatuses. The three-dimensional object shaping apparatus 10 may be one of the known ink jet printers partly modified. The three-dimensional object shaping apparatus 10 may be a partly modified ink jet printer for two-dimensional image printing in which an ink of ultraviolet curing type (UV ink) is used.

According to this example, the three-dimensional object shaping apparatus 10 is an example of liquid discharge apparatuses configured to discharge ink droplets by ink-jet technique. This apparatus is configured to further perform operations other than the shaping of a three-dimensional object by discharging the ink droplets. For example, the three-dimensional object shaping apparatus 10 may be operable as an ink jet printer configured to print two-dimensional images. The three-dimensional object shaping apparatus 10 may accordingly print a color image on a flat medium by changing inks to be used. According to this example, the three-dimensional object shaping apparatus 10 is configured to further perform image printing on a three-dimensional medium and raised printing. These printing operations will be described later in further detail.

According to this example, the three-dimensional object shaping apparatus 10 includes a head unit 12, a main scan driver 14, a shaping table 16, and a controller 18. The head unit 12 is a structural element of the apparatus from which liquid droplets (ink droplets), a material of the three-dimensional object 50, are dischargeable. The head unit 12 discharges and cures the ink droplets of an ink containing a curable resin which is curable under predetermined conditions. The head unit 12 thereby forms layers constituting the three-dimensional object 50.

Specifically, the head unit 12 according to this example may have a plurality of ink jet heads from which the ink droplets are dischargeable in response to an instruction from the controller 18. The curable resin may be an ultraviolet-curable resin curable by being irradiated with ultraviolet light. In this instance, the head unit 12 discharges ink droplets of an ink of ultraviolet-curing type to form the three-dimensional object 50. By irradiating ultraviolet light from an ultraviolet light source, ink layers are cured. According to this example, the head unit 12, during the shaping of the three-dimensional object 50, stacks on one another a plurality of ink layers 52 to form the three-dimensional object 50 as illustrated in FIG. 1B.

According to this example, the ink may refer to a liquid discharged from the ink jet heads. The ink jet head may refer to a liquid discharge head from which the liquid is dischargeable by ink-jet technique. The ink-jet technique may refer to discharge of the liquid droplets through nozzles by actuating driver elements such as piezoelectric elements. The more specific structural feature and operation of the head unit 12 will be described later in further detail.

The main scan driver 14 is a driver that prompts the head unit 12 to perform main scans. Prompting the head unit 12 to perform the main scan may be rephrased as prompting the ink jet heads of the head unit 12 to perform the main scans. The main scan may refer to an operation to discharge the ink droplets while the head unit 12 is moving in a predefined main scanning direction (Y direction in the drawings; Y scan Yd).

According to this example, the main scan driver 14 has a carriage 102 and a guide rail 104. The carriage 102 is a retainer for retaining the ink jet heads of the head unit 12 facing the shaping table 16. By retaining the ink jet heads facing the shaping table 16, the ink jet heads may be retained so that a direction in which the ink droplets are discharged is looking toward the shaping table 16. During the main scan, the carriage 102 moves along the guide rail 104 with the ink jet heads retained therein. The guide rail 104 is a member in the form of a rail that guides the movement of the carriage 102. During the main scan, the guide rail 104 moves the carriage 102 in response to an instruction from the controller 18.

During the main scan, the head unit 12 may be moved relative to the three-dimensional object 50. According to a modified example of the three-dimensional object shaping apparatus 10, the head unit 12 may be positionally fixed so that the shaping table 16 is moved instead in order to move the three-dimensional object 50.

The shaping table 16 is a table having an upper surface on which the three-dimensional object 50 currently being shaped is mounted. According to this example, the shaping table 16 is structured to move its upper surface upward and downward (Z direction in the drawings). In response to an instruction from the controller 18, the shaping table 16 moves its upper surface in pace with the progress of an operation to shape the three-dimensional object 50. The shaping table 16 thus structured may suitably adjust a distance (gap) between the head unit 12 and a currently shaped surface of the three-dimensional object 50. The currently shaped surface of the three-dimensional object 50 may refer to a surface on which subsequent layers will be formed by the head unit 12. For a scan in the Z direction (Z scan Zd), the shaping table 16 is moved upward and downward relative to the head unit 12, however, the head unit 12 may be moved instead.

The controller 18 may be the CPU of the three-dimensional object shaping apparatus 10. The controller 18 controls the structural elements of the three-dimensional object shaping apparatus 10 based on data on the three-dimensional object 50 to be shaped (shaping data), thereby controlling the operation to shape the three-dimensional object 50. The apparatus according to this example thus advantageous may successfully shape the three-dimensional object 50.

As described earlier, the three-dimensional object shaping apparatus 10, in addition to the operation to shape a three-dimensional object, performs an operation to print a two-dimensional image. According to this example, the controller 18 may set, as operation modes of the three-dimensional object shaping apparatus 10, at least a two-dimensional printing mode for printing an image on a flat print surface, and an object shaping mode for shaping a three-dimensional object by an additive manufacturing method. The two-dimensional printing mode may refer to an operation mode (color mode) for printing a color image by prompting the three-dimensional object shaping apparatus 10 to operate as an ink jet printer. The object shaping mode may refer to an operation mode (3D printer mode) for shaping a three-dimensional object by prompting the three-dimensional object shaping apparatus 10 to operate a 3D printer.

FIG. 1C is an explanatory drawing of the operation during the two-dimensional printing mode. When the apparatus is operating in the two-dimensional printing mode, the three-dimensional object shaping apparatus 10, instead of shaping the three-dimensional object 50, prints an image on a medium 60 having a flat print surface. The three-dimensional object shaping apparatus 10 may place the medium 60 on the shaping table 16 and prints an image on the medium 60 in the same manner as or a similar manner to the known ink jet printers.

In order for the operations in different operation modes to be more effective, the controller 18 according to this example suitably changes control settings for the respective structural elements in accordance with the set operation mode. For example, as for a moving speed at which the head unit 12 is moved during the main scan, the controller 18 employs different speeds in the two-dimensional printing mode and in the object shaping mode. Specifically, the controller 18 according to this example regulates the moving speed during the two-dimensional printing mode to a first speed, while regulating the moving speed at least at a certain timing during the object shaping mode to a second speed lower than the first speed. When the apparatus is set to be in the two-dimensional printing mode, the main scan driver 14 regulates the moving speed in the main scanning direction to the first speed and prompts the head unit 12 to perform the main scan at the first speed. When the apparatus is set to be in the object shaping mode, the main scan driver 14 regulates the moving speed in the main scanning direction at least at a certain timing to a second speed lower than the first speed and prompts the head unit 12 to perform the main scan at the second speed.

According to the apparatus, the moving speed of the head unit 12 during the main scan may be regulatable suitably for the operation modes. When, for example, a printing speed as high as the printing speeds of the known ink jet printers is employed during the operation in the two-dimensional printing mode, high-speed printing may be attainable that is comparable to the known ink jet printers.

When the apparatus is set to be in the object shaping mode, the moving speed of the head unit 12 may be decelerated to a speed low enough for any portion to be shaped with high precision. This may enable high-precision shaping of the three-dimensional object 50 to be appropriately performed. Further, one three-dimensional object shaping apparatus 10 may be more appropriately operable in both of the two-dimensional printing mode and the object shaping mode.

When a three-dimensional object is shaped by the additive manufacturing method, higher precision is conventionally demanded at the timings of forming end parts of the ink layers. The end parts of the ink layer may refer to one end side and the other end side (front-end side and rear-end side) in the main scanning direction. When the apparatus is set to be in the object shaping mode, the controller 18 regulates the moving speed in the main scanning direction to the second speed at least at a timing of forming an end part on one side of the ink layer in the main scanning direction formed by each main scan. Such speed changes then may be performed in various manners, including successive changes and stepwise changes. According to this aspect, the moving speed of the head unit may be decelerated at the timings of forming the end parts of the ink layers. This may enable the end parts of the ink layers to be formed with high precision.

Instead of decelerating the moving speed only at a certain timing during the main scan, the moving speed of the head unit 12 during each main scan may be regulated to stay at the constant second speed. The moving speed of the head unit 12 throughout each main scans may be regulatable to the second speed depending on a degree of precision required to form the end parts of the ink layer. This may enable the moving speed of the head unit 12 to be regulated more easily and appropriately. By thus performing low-speed main scanning for the whole surface, higher precision may be attainable during the shaping of a three-dimensional object.

The moving speed of the head unit may be decelerated only at a certain timing during the main scan. For example, the moving speed of the head unit 12 may be lowered to the second speed only at a timing of forming an end part of the ink layer in the main scanning direction, in which case the head unit 12 is moved at a moving speed higher than the second speed at any other timings. By thus decelerating the moving speed of the head unit only at any timing necessary, the shaping of a three-dimensional object may be accelerated.

According to this example, the controller 18 may further set, as the operation modes of the three-dimensional object shaping apparatus 10, a raised printing mode and a three-dimensional object decorative printing mode, in addition to the two-dimensional printing mode and the object shaping mode. The raised printing mode may refer to an operation mode for forming a bulging portion(s) in at least a part of the medium 60 by discharging the ink droplets from the head unit 12 onto the medium 60. For example, color inks (YMCK inks) may be used as well as in the two-dimensional printing mode to form a colored bulging portion(s). The three-dimensional object decorative printing mode may refer to an operation mode for printing an image on a three-dimensional medium with unevenness on its print surface. In this instance, color inks (YMCK inks) may be used, as well as in the two-dimensional printing mode, to print a color image on the three-dimensional medium. Accordingly, one three-dimensional object shaping apparatus 10 may be operable more effectively in various operation modes. The operations during the raised printing mode and the three-dimensional object decorative printing mode will be described later in further detail.

The three-dimensional object shaping apparatus 10 may further include any structural elements necessary for the shaping of the three-dimensional object 50 in addition to the ones illustrated in FIGs. 1A. For example, the three-dimensional object shaping apparatus 10 may further include a sub scan driver that prompts the head unit 12 to perform a sub scan. The sub scan may refer to an operation to move the ink jet heads of the head unit 12 in a sub scanning direction (X direction in the drawings) orthogonal to the main scanning direction relative to the three-dimensional object 50 currently being shaped. According to this example, the sub scanning direction is an example of orthogonal directions to the main scanning direction. The sub scanning driver prompts the head unit 12 to perform the sub scan if the need arises, for example, when forming the three-dimensional object 50 larger in width in the sub scanning direction than the allowable shaping width of the ink jet heads of the head unit 12. Specifically, the sub scanning driver may be configured to move the shaping table 16 in the sub scanning direction. Alternatively, the sub scanning driver may be configured to move the guide rail 104 together with the carriage 102 retaining therein the head unit 12.

When the three-dimensional object shaping apparatus 10 operates in multiple passes, the sub scanning driver may prompt the head unit 12 to perform the sub scan between the main scans. When, for example, the three-dimensional object shaping apparatus 10 is operating in the two-dimensional printing mode, multi-pass image printing may be employable. When the apparatus is operating in any other operation modes, multi-pass printing may also be employable if the need arises. In such instances, the sub scanning driver prompts the head unit 12 to perform the sub scan.

The head unit 12 according to this example is hereinafter described in further detail. As described earlier, the three-dimensional object shaping apparatus 10 according to this example may be operable as an ink jet printer configured to print two-dimensional images. The three-dimensional object shaping apparatus 10 may print color images. First, an exemplified aspect of the head unit 12 when the apparatus is operating as an ink jet printer is described.

FIGs. 2A to 2B are drawings illustrating comparison of an exemplified aspect of the head unit 12 to the conventional head unit 22. FIG. 2A is a drawing of an exemplified aspect of the conventional head unit 22. FIG. 2B is a drawing of an exemplified aspect of the head unit 12 according to this example. The head unit 22 and the head unit 12 both have a plurality of ink jet heads 202. When the apparatus is operating as an ink jet printer, the ink jet heads 202 respectively discharge ink droplets of different color inks. The different color inks may refer to process color inks conventionally used in color printing. The head unit 22 and the head unit 12 both have a plurality of ink jet heads 202 that respectively discharge the ink droplets of Y (yellow), M (magenta), C (cyan), and K (black) color inks. The head unit 22 and the head unit 12 may further have other ink jet heads that discharge other color ink droplets.

As described earlier, the three-dimensional object shaping apparatus 10 according to this example uses the ink of ultraviolet curing type to form a three-dimensional object. The apparatus operating as an ink jet printer may also preferably use the ink of ultraviolet curing type. According to this example, the ink jet heads 202 may discharge the ink droplets of the ink of ultraviolet curing type.

Though not illustrated in the drawings, the head unit 22 and the head unit 12 may further have an ultraviolet light source from which ultraviolet light is irradiated. A suitable example of the ultraviolet light source may be UVLED. The ultraviolet light source may be disposed on at least one side in the main scanning direction (Y direction) relative to the ink jet heads 202. Preferably, the ultraviolet light source may be disposed on one side and the other side in the main scanning direction relative to the ink jet heads 202. The ultraviolet light source may be disposed on one side alone in the main scanning direction relative to the ink jet heads 202. Other examples of the ultraviolet light source may include ultraviolet lamps and metal halide lamps. The head unit 12 further including the ultraviolet light source is hereinafter described in further detail.

In the illustrated conventional head unit 22 and head unit 12 according to this example, their ink jet heads 202 are structurally and technically identical. Specifically, the ink jet heads 202 of the head unit 22 and the head unit 12 each have a nozzle array 304 having a plurality of nozzles 302 spaced in a nozzle array direction at the nozzle pitch of p defined as a given interval. In the illustrated head unit 22 and the head unit 12, the nozzle array direction is a direction in parallel with the sub scanning direction (X direction). Thus, the head unit 22 and the head unit 12 have a plurality of nozzle arrays 304 from which the ink droplets are dischargeable by ink-jet technique. To print a two-dimensional image, the nozzle arrays 304 respectively discharge the ink droplets of different color inks.

For the sake of simple illustration, the nozzles 302 of the ink jet head 202 aligned in the sub scanning direction in the drawings are fewer than the nozzles of the conventional ink jet heads. The ink jet head 202 is resultantly reduced in length in the sub scanning direction. In the ink jet head 202 for practical use, there may be more nozzles 302 depending on printing and shaping precisions and specs. With more nozzles 302, the ink jet head 202 may be accordingly larger in length in the sub scanning direction. The ink jet head 202 may be suitably selected from the conventionally available ink jet heads. The nozzle array direction in which the nozzles 302 are aligned in each nozzle array 304 may not necessarily be in parallel with the sub scanning direction. For example, the nozzle array direction may be a direction intersecting with the main scanning direction at any angles but the right angle.

Comparing the conventional head unit 22 and the head unit 12 according to this example, their ink jet heads 202 are disposed differently as can be seen in the drawings. In the conventional head unit 22, the ink jet heads 202 are disposed next to one another in the main scanning direction with their positions in the sub scanning direction coincident with one another. According to the structure, positions of the nozzles 302 in each of the nozzle arrays 304 are coincident with the corresponding nozzles 302 in the other nozzle arrays 304 in the sub scanning direction. As a result, positions of the nozzles 302 in each of the nozzle arrays 304 are collinear with positions of the nozzles 302 in the other nozzle arrays 304 in the main scanning direction.

The conventional head unit 22 may be structurally the same as employed in the known ink jet printers. Such known ink jet printers are mostly configured to print two-dimensional images by multi-pass printing. Conventionally, multi-pass printing may be employed in printing using inks of ultraviolet curing type. The multi-pass printing may also be employed to print an object at a resolution higher than the nozzle pitch p in one nozzle array or to necessarily suppress adverse effects resulting from the variability of nozzle discharge properties. In this respect, the multi-pass printing may refer to a printing technique that performs a plurality of main scans for each printing target region.

As for the multi-pass printing, a resolution corresponding to a distance d smaller than the nozzle pitch p in the nozzle array 304 may be defined as a printing resolution in the sub scanning direction. In the illustrated example, the distance d corresponding to the printing resolution may be specifically one-fourth of the nozzle pitch p. In this instance, the printing is performed at a high resolution corresponding to the distance d smaller than the nozzle pitch p by the multi-pass technique with at least four passes or more passes. In the illustrated example, the distance d may be a distance corresponding to the resolution of 600 dpi. The nozzle pitch p may be a distance corresponding to 150 dpi.

In view of, for example, desirability of suppressing adverse effects resulting from the variability of nozzle discharge properties, even a greater number of printing passes may be preferably employed. The known ink jet printers that use the inks of ultraviolet curing type perform the printing in approximately 8 to 32 (for example, 8, 16, 32) passes.

The known serial ink jet printers thus generally designed for the multi-pass printing may be difficult for use in one-pass printing. At any rate, the one-pass printing is structurally impossible when the distance d corresponding to the resolution in the sub scanning direction is smaller than the nozzle pitch p. Likewise, it becomes difficult for the three-dimensional object shaping apparatuses, such as 3D printers, to operate in one pass if the conventional head unit 22 is used therein. The one-pass operation in any three-dimensional object shaping apparatus may refer to an operation to form each of ink layers 52 constituting the three-dimensional object 50 (see FIGs. 1) in one main scan. The operation of the three-dimensional object shaping apparatus will be described later in further detail.

In the head unit 12 according to this example, the ink jet heads 202 are disposed next to one another in the main scanning direction with their positions in the sub scanning direction being displaced from one another as illustrated in FIG. 2A. The nozzle arrays 304 of the head unit 12 are disposed next to one another in the main scanning direction with their positions partly overlapping in the sub scanning direction.

A displacement distance between the positions of the ink jet head 202 in the sub scanning direction is smaller than the nozzle pitch p. The positions of the nozzles 302 in each of the nozzle arrays 304 accordingly differ in the sub scanning direction from the positions of the nozzles 302 in the other nozzle arrays 304.

Specifically, the displacement distance between the positions of the ink jet head 202 in the sub scanning direction is a distance calculated by dividing the nozzle pitch p by an integral number (distance equal to an integral number(th) part of the nozzle pitch). In the illustrated example, the displacement distance between the positions of the ink jet head 202 is one-fourth of the nozzle pitch p. This distance is equal to the distance d corresponding to the resolution in the sub scanning direction.

Generalizing the head unit 12 according to this example, it may be said that the plurality of nozzle arrays 304 are disposed next to one another in the main scanning direction so that a positional displacement d in the sub scanning direction between end nozzles 302 in adjacent ones of the nozzle arrays 304 is represented by a distance equal to an integral multiple of p/n (n is an integral number greater than or equal to 2) but is unequal to an integral multiple of p. The end nozzle 302 refers to the nozzle 302 located at the end of each nozzle array 304. In the example illustrated in FIG. 2B, p/n is the positional displacement d in the sub scanning direction between adjacent ones of the nozzle arrays 304. In the illustrated example, the head unit 12 may preferably have n number of or a greater number of nozzle arrays.

The apparatus equipped with the head unit 12 thus characterized, when used as an ink jet printer to print a two-dimensional image, may successfully print color images. Further, using the head unit 12 may more favorably facilitate the operation to shape the three-dimensional object 50 than using the conventional head unit 22. These printing operations will be described later in further detail.

First, the operation of the apparatus as an ink jet printer to print two-dimensional images is described in further detail. FIGs. 3A to 3B are explanatory drawings of the operation to print a two-dimensional image using the head unit 12. FIG. 3A is a drawing of an exemplified aspect of the head unit 12, illustrating the head unit 12 described referring to FIG. 2B. FIG. 3B is an enlarged view of exemplified target positions for ink droplets to be discharged from the nozzle arrays of the ink jet heads 202 in each main scan. Referring to FIG. 3B, each grid indicates a discharge position for the ink droplets to be discharged, illustrating an exemplified arrangement of ink dots formed in one pass when the number of printing passes is 16. These discharge positions are positions decided suitably for a printing resolution. Specifically describing the illustrated example, the grids are arranged in the main scanning direction and the sub scanning direction so that a distance between centers of adjacent ones of the grids is equal to the distance d corresponding to a printing resolution.

In each main scan, the ink jet heads 202 each discharge the ink droplets through the nozzles of the nozzle arrays 304 toward the discharge positions. Depending on how the ink jet heads 202 are disposed, the positions of the ink discharges from the ink jet heads 202 in one main scan may be as illustrated in the drawing.

Specifically, in one main scan, the ink jet head 202 for Y color may discharge the ink droplets to the discharge positions marked with an ink dot 402y in the drawing, and the dot 402y is a Y-color ink dot. Correspondingly to the nozzle pitch p (= 4d) in one nozzle array 304, the dots 402y formed in one main scan are spaced at the intervals of p in the sub scanning direction (X direction) as illustrated in the drawings. In the illustrated example, the dots 402y are spaced at the intervals of q in the main scanning direction (Y direction). The interval q is an interval between the ink dots formed in the main scanning direction by the same nozzle. In the illustrated example, the interval q is equal to the nozzle pitch (= 4d).

Likewise, in one main scan, the ink jet heads 202 for M, C, and K colors may discharge the ink droplets to the discharge positions respectively marked with ink dots 402m, 402c, and 402k in the drawing, and the ink dots 402m, 402c, and 402k are respectively M-color, C-color, and K-color ink dots. The ink dots 402m, 402c, and 402k are, as with the dots 402y, respectively displaced from the dots 402y correspondingly to the positional displacement between adjacent ones of the nozzle arrays 304 in the ink jet heads 202.

In this instance, the multi-pass technique, for example, may be employed to displace the positions at which the different color ink dots are formed in each main scan. Then, the different color ink dots may be formed at all of the discharge positions within a printing target region. Specifically, any one of the ink jet heads 202 may be controlled as with the conventional head unit 22 (see FIGs. 2A to 2B), and the other ones of the ink jet heads 202 may be adjusted suitably for the positional displacements among the nozzle arrays 304. This may favorably facilitate the multi-pass printing. For example, the head unit 12 may be moved in the sub scanning direction, and a similar main scan may be performed by each color nozzle array of the head unit 12 to positions displaced in the main and sub scanning directions by (1/4)×p or its integral multiple. In the illustrated example wherein the number of passes is 16, the printing is performed so that the ink droplets fill all of the positions in the illustrated 4×4 matrix by repeating such a main scan 16 times. According to this example, the two-dimensional image printing may be appropriately performed by the three-dimensional object shaping apparatus 10.

In the operation illustrated in FIG. 3B, as described earlier, the ink droplets are discharged from all of the nozzles 302 of the head unit 12 in a manner that the intervals in the main scanning direction are each equal to the nozzle pitch p. A smallest interval between the ink dots formed in the same main scan is equal to an interval between the different color ink dots next to each other in a diagonal direction. The diagonal direction may refer to a direction at 45 degrees to the X and Y directions. In the illustrated example, the interval in the diagonal direction is √2×(1/4)×p.

Accordingly, it may be avoided one main scan forms a color ink dot in a close range of a different color ink dot in the main scanning direction. This may be a great advantage, effectively preventing the ink dots (for example, dots of different colors) from continuing into one another in the main scanning direction, because such a continuity of ink dots in the main scanning direction during the main scan is likely to cause streak-like irregularity. According to this example, therefore, the occurrence of streak-like irregularity may be unlikely. Further advantageously, a possible continuity of the ink dots may be preventable in the sub scanning direction as well as in the main scanning direction. This example, therefore, may markedly improve the two-dimensional image printing in quality.

A printing speed at which a two-dimensional image is printed may depend on the number of disposed nozzle arrays and the number of printing passes. By way of comparison under the same conditions, this example may achieve a printing speed almost as high as the printing speeds of the known ink jet printers using the head unit 22 illustrated in FIG. 2A. Resultantly, the apparatus thus advantageous may attain higher printing quality without decelerating the printing speed.

So far, the ink jet heads 202 for YMCK four colors alone are used, which are illustrated in FIGs. 2 and 3, to simplify the description. To aim at a higher printing resolution, an ink jet head for a pale color of at least any one of these colors may be further employed. By, for example, using a pale color ink jet head(s) for any ones of MC, MCK, and YMCK, more color inks than four may be usable in the head unit 12.

The pale color ink jet head(s) may be disposed at positions coincident in the sub scanning direction with the other darker color ink jet heads. Then, the pale color nozzle(s) and the darker color nozzles may be lined up in the main scanning direction. Accordingly, the printing may be appropriately performed with the pale and dark color inks as with the conventional printing operations.

The pale color ink jet heads may be positionally displaced from one another in the sub scanning direction as with the color ink jet heads so far described. With a greater number of ink jet heads than N number of ink jet heads, cycles of spotting the same color ink dots and the number of repetitive operations may be appropriately increased in the illustration of FIG. 3B. In this manner, the printing may be appropriately performed with dark and pale inks. If the need arises, an ink jet head for clear ink and/or an ink jet head for white color may be further usable.

The description given so far is mostly focused on the structure wherein there is the positional displacement d between the nozzles of adjacent ones of the nozzle arrays as illustrated in FIG. 2B. In contrast to the illustration of FIG. 2B, the different color ink jet heads 202 may be disposed in a different order. Specifically, the nozzle arrays may be differently disposed by exchanging the positions of the M-color ink jet head 202 and the C-color ink jet head 202. In this manner, the dot positions of different colors may be more distantly distributed during the color printing. Then, a continuity of dots may be more unlikely, more effectively preventing the occurrence of streak-like irregularity. Such a modified example will be described later in further detail.

The operation to shape a three-dimensional object according to this example is hereinafter described in further detail. The description starts with the operation to shape a three-dimensional object using the conventional head unit 22.

FIGs. 4A to 4B are drawings of an exemplified operation to shape a three-dimensional object using the conventional head unit 22. FIG. 4A is a drawing of an exemplified aspect of the head unit 22, illustrating the head unit 22 after the inks therein are replaced with the object shaping ink.

To shape a three-dimensional object using the conventional head unit 22, the printing inks currently filled in the ink jet heads 202 of the head unit 22 are replaced with the object shaping ink. Specifically, the YMCK color inks used in the ink jet heads 202 to print two-dimensional images are replaced with the object shaping ink. The object shaping ink may be an ink for exclusive use in object shaping (Mo ink). Other examples of the object shaping ink may include inks of predetermined colors such as white and clear inks. During the main scan, the head unit 22 discharges the object shaping ink droplets from the respective nozzle arrays during the main scan.

As described in connection with FIG. 2, the ink jet heads 202 of the conventional head unit 22 are disposed next to one another in the main scanning direction with their positions in the sub scanning direction coincident with one another. The nozzles are spaced at a constant interval equal to the nozzle pitch p in each of the ink jet heads 202. The ink dots formed in one main scan are resultantly formed away in the sub scanning direction from the adjacent ink dots in the same direction by at least a distance corresponding to the nozzle pitch p.

When a two-dimensional image is printed by the multi-pass technique, the nozzle pitch p may be usually greater than the distance d corresponding to a printing resolution. The dot size (diameter) of each ink dot formed in one main scan may be usually greater than the distance d corresponding to a printing resolution and smaller than the nozzle pitch p. Specifically, the ink dot size may be as large as about 1.8 times of the distance d corresponding to a printing resolution. The ink dots formed in one main scan are resultantly away from one another in the sub scanning direction.

To print a two-dimensional image, the ink droplets are discharged from the respective ink jet heads 202 at concentrations suitable for colors of pixels constituting the image to be printed. Unless completely painted over in a particular color, none of the color printing inks is independently discharged for printing at the concentration of 100%. The printing at the concentration of 100% may refer to discharge of the ink droplets to all of the discharge positions defined in a given region based on a resolution.

To shape the three-dimensional object 50, on the other hand, the object shaping ink may be usually discharged at the concentration of 100% to form each of the ink layers 52 (see FIGs. 1) constituting the three-dimensional object 50. Discharging the object shaping ink at the concentration of 100% may be rephrased as discharging the object shaping ink droplets from the ink jet heads 202 so that the concentrations of all the ink droplets add up to 100%.

If the object shaping ink is discharged at a highest concentration in each main scan from the ink jet heads 202 in order to form a three-dimensional object using the conventional head unit 22, the ink droplets may be discharged to all of the discharge positions in the main scanning direction. Then, the ink dots formed in one main scan may be resultantly adjacent to one another with a resolution-dependent distance therebetween. A resolution of the object shaping is equal to a printing resolution. Therefore, the ink dot size is greater than the distance between adjacent ones of the dots in the main scanning direction. The ink dots thus formed in each main scan may continue into one another in the main scanning direction.

FIG. 4B is a drawing of a state subsequent to one main scan performed by the conventional head unit 22. As described earlier, the interval in the sub scanning direction between the ink dots formed in one main scan is equal to the nozzle pitch p, and the ink dots become continuous in the main scanning direction. After one main scan is performed, therefore, a plurality of lines 404 extending in the main scanning direction are in parallel with one another in the sub scanning direction at the intervals of p as illustrated in the drawing.

Shaping a three-dimensional object using the head unit 22, due to its structural characteristics, inevitably necessitates multi-pass technique. In each main scan, the head unit 22 may form one ink layer 52 by forming the plurality of lines 404 displaced from one another in the sub scanning direction.

However, the lines 404 thus formed are easily reflected on the ink layer 52, and streak-like irregularity associated with the lines 404 are likely to occur in the ink layer 52. Employing multiple passes in the object shaping using the conventional head unit 22, therefore, imposes the risk of degrading the quality of the three-dimensional object 50 to be shaped.

On the other hand, the head unit 12 according to this example may effectively control the occurrence of streak-like irregularity. The operation to shape a three-dimensional object using the head unit 12 is hereinafter described in further detail.

The three-dimensional object shaping apparatus 10 according to this example may employ either one of multi-pass object shaping or one-pass object shaping during the object shaping mode. The description starts with the operation to shape a three-dimensional object in multiple passes.

FIGs. 5A to 5B are drawings of an exemplified operation to shape a three-dimensional object using the head unit 12 according to this example. FIG. 5A is a drawing of an exemplified structural feature of the head unit 12, illustrating the head unit 12 after the inks therein are replaced with the object shaping ink. FIG. 5B is a drawing of a state subsequent to one main scan performed by the head unit 12.

In the example illustrated in FIGs. 5, the three-dimensional object shaping apparatus 10 (see FIGs. 1A to 1C) performs the object shaping in multiple passes. The multi-pass object shaping may refer to discharge of the ink droplets by a plurality of main scans to all of target positions for the ink droplets to be discharged in order to form one ink layer 52 (see FIGs. 1A to 1C).

During each main scan, the head unit 12 discharges the ink droplets from the nozzles of the ink jet heads 202 now filled with the object shaping ink to the same discharge positions as in the printing operation described referring to FIG. 3B. During each of the main scans, the head unit 12 discharges the object shaping ink droplets from the respective nozzle arrays. Then, one ink layer 52 is formed by the main scans plurally performed. This may enable high-precision formation of the ink layers to be appropriately performed.

The operation thus performed prevents adjacent ones of the ink dots in the main scanning direction from continuing into one another, avoiding that the lines 404 (see FIGs. 4A to 4B) are formed by the ink dots continuous in the main scanning direction. This example may effectively prevent the occurrence of streak-like irregularity. Further advantageously, the ink layer 52 may be adequately flattened.

As described earlier, the head unit 12 according to this example may shape a three-dimensional object by way of one-pass technique by which one ink layer 52 is formed in one pass, instead of the multi-pass technique. This may enable high-precision shaping of a three-dimensional object to be more speedily performed. Further advantageously, each ink layer 52 may be more adequately flattened. The one-pass object shaping is hereinafter described in further detail.

FIGs. 6A to 6B are drawings of another exemplified operation to shape a three-dimensional object using the head unit 12, illustrating the one-pass object shaping. FIG. 6A is a drawing of an exemplified aspect of the head unit 12, illustrating the head unit 12 after the inks therein are replaced with the object shaping ink. FIG. 6B is a drawing of a state subsequent to one main scan performed by the head unit 12.

As with the example described referring to FIGs. 5, the object shaping ink is usable in the ink jet heads 202 for the one-pass object shaping. Collectively looking at the plural nozzle arrays of the ink jet heads 202, the nozzles may be next to one another at the intervals of d corresponding to a shaping resolution. Generalizing this structure, when the plural nozzle arrays of the ink jet heads 202 are collectively looked at, a resolution in the sub scanning direction may correspond to the distance p/n, where p represents the nozzle pitch in one nozzle array, and n represents an integral number greater than or equal to 2. Preferably, the number of nozzle arrays may be at least n or greater than n. In the illustrated example, n = 4, and the number of nozzle arrays is n.

The one-pass object shaping forms one ink layer 52 (see FIGs. 1) by using the nozzle arrays thus disposed and discharging the ink droplets from the plural nozzle arrays in one main scan. The one-pass operation thus performed may succeed in forming one ink layer 52 at a high resolution corresponding to a narrower distance than the nozzle pitch p in one nozzle array. This may enable high-precision shaping of a three-dimensional object to be more speedily performed.

To shape the three-dimensional object 50, the object shaping ink is usually discharged at the concentration of 100% to form each of the ink layers 52 constituting the three-dimensional object 50. When the object shaping is performed in one pass, the ink droplets are discharged in one main scan to a region where the layers 52 are formed so that the concentrations of the discharged ink droplets from the nozzle arrays added up to 100%. Specifically, in each main scan, the ink droplets are discharged through the nozzles of the nozzle arrays toward different positions. In at least a given region previously defined, the ink droplets are discharged from the nozzle arrays to all of the target positions for the ink droplets to be discharged in order to form one ink layer 52. This may enable one-pass formation of one ink layer 52 to be appropriately performed.

All of the target positions for the ink droplets to be discharged may refer to all of positions decided based on a shaping resolution. The previously defined region may refer to a region predefined in accordance with the shape of a three-dimensional object to be shaped. This region may be a region in which an island-like ink layer 52 should be formed.

For the sake of simple illustration, the ink dots 402 formed by the main scans are illustrated in smaller sizes than the grids indicating the discharge positions in the drawings of this application. For practical use, the sizes of the ink dots 402 (diameters) may be adequately larger than the distance d corresponding to a shaping resolution. When the ink dots 402 are formed in one main scan next to one another at the adjacent discharge positions in the main scanning direction and the sub scanning direction, these dots 402 continue into one another before being cured.

During the one-pass object shaping illustrated in FIGs. 6A to 6B, the ink dots 402 are next to one another at the intervals equal to the distance d (= 1/4×p) corresponding to a shaping resolution in the main and sub scanning directions both as illustrated in FIG. 6B in order to form the ink dots 402 at all of the discharge positions in a given region previously defined. When the ink dots 402 are larger than the distance d corresponding to a resolution, thus densely forming the ink dots 402 next to one another in one main scan leads to a continuity of ink dots 402 in the main and sub scanning directions both.

This is, however, a sheet-like continuity of dots 402 along the ink layer 52, preventing the continuous dots from forming lines in a given direction. Specifically, the ink dots 402 in liquid form continue into one another at positions on one ink layer 52 and flattened. Then, the ink dots 402 are irradiated with ultraviolet light to be cured. This may successfully form very flat ink layers 52 that are evenly formed and stacked on one another with no streak-like irregularity.

Further, the ink layers 52 may be leveled on their entire surfaces. This may effectively avoid adverse effects resulting from variable volumes of discharged ink droplets associated with different nozzles discharge properties. This example, therefore, may effectively control adverse effects resulting from the variability of nozzle discharge properties without employing the multi-pass technique to discharge the ink droplets.

To shape a three-dimensional object by the additive manufacturing method, the operation to form the ink layer 52 is repeatedly performed in a region of a given area dimension to stack the ink layers 52 thereby formed on one another. The ink layers 52 are desirably as flat as possible in the main and sub scanning directions both. By forming the ink layers 52 as so far described, the ink layers 52 superior in flatness in the main and sub scanning directions both may be suitably formed. This may enable high-precision shaping of a three-dimensional object to be appropriately performed.

Further advantageously, the formation of each ink layer 52 may be completed in one main scan, which reduces time required to shape a three-dimensional object. This may achieve both of two objectives in the shaping of a three-dimensional object; flatness and evenness of the ink layers 52 and fast-speed operation.

Thus, an advantageous three-dimensional object shaping apparatus may be provided that is more suitably configured to shape a three-dimensional object. As described referring to FIGs. 2 and 3, the three-dimensional object shaping apparatus 10 according to this example may be suitably operable as a printer for use in printing a two-dimensional image (ink jet printer) if the need arises.

When the apparatus is operating in the two-dimensional printing mode, high-quality printing may be achievable without decelerating a printing speed while effectively controlling the occurrence of streak-like irregularity. When the apparatus is operating in the object shaping mode to shape a three-dimensional object in one pass or multiple passes, the ink dots are preventing from continuing into one another one-sidedly in the main scanning direction, improving the ink layers in flatness. This may enable high-precision shaping of a three-dimensional object to be more appropriately performed. According to this example, one three-dimensional object shaping apparatus 10 may be appropriately operable in both of the two-dimensional printing mode and the object shaping mode. Resultantly, an apparatus may be obtainable that is suitably configured for both of operations to print two-dimensional images and to shape three-dimensional objects.

As described earlier, the inks used in the ink jet heads 202 of the three-dimensional object shaping apparatus 10 may be suitably replaceable depending on the operation mode. As described referring to FIGs. 5 and 6, when the three-dimensional object shaping apparatus 10 shapes a three-dimensional object, the object shaping ink is used as the ink to be filled in the ink jet heads 202. The object shaping ink and support ink may be both usable.

When the three-dimensional object shaping apparatus 10 is operating as a two-dimensional image printer, the object shaping ink filled in the ink jet heads 202 is replaced beforehand with the printing inks. For this purpose, the YMCK color inks may be used as the inks for the ink jet heads 202 as illustrated in FIGs. 2 and 3. Thus, one three-dimensional object shaping apparatus 10 may be more appropriately operable in both of the two-dimensional printing mode and the object shaping mode.

As described referring to FIGs. 6A to 6B, when a three-dimensional object is shaped by the three-dimensional object shaping apparatus 10 according to this example, the shaping operation is performed in one pass. Accordingly, flatness and evenness of the ink layers 52 and fast-speed operation may be both realized. If a two-dimensional image is printed in one pass with different color inks, however, the inks may easily bleed into one another, possibly resulting in poor printing quality. Although the one-pass technique may be employed to shape a three-dimensional object, the apparatus operating as a printer may preferably employ the multi-pass technique, wherein the inks are cured for each pass. This may prevent the bleeding of inks during the printing operation, while stacking the flattened ink layers 52 with less unevenness on one another during the shaping operation to provide a well-formed three-dimensional object with fine appearance. The shaping operation, when performed by the one-pass technique, may achieve a faster shaping speed. Thus, one apparatus may be more appropriately operable to shape three-dimensional objects and print two-dimensional images.

The three-dimensional object shaping apparatus 10 according to this example is hereinafter described in further detail. At first, further detail of the head unit 12 is illustrated. FIG. 7 is a drawing of an exemplified structural aspect of the head unit 12 illustrated in more detail, wherein the head unit 12 further includes an ultraviolet light source.

As described in connection with FIGs. 2A to 2B, the ultraviolet light source of the head unit 12 according to this example may be disposed on at least one side in the main scanning direction (Y direction) relative to the ink jet heads 202. In the example illustrated in FIG. 7, the head unit 12 has, as an example of the ultraviolet light source, a plurality of ultraviolet irradiating units 204. The ultraviolet irradiating units 204 are disposed along the ink jet heads 202 on one side and the other side in the main scanning direction.

The ultraviolet irradiating units 204 may each include a weak ultraviolet light source 212 and an intense ultraviolet light source 214. The weak ultraviolet light source 212 is an ultraviolet light source used to tentatively cure (semi-cure) the ink dots formed with the ink of ultraviolet curing type. This light source irradiates the ink dots with an ultraviolet light weak enough to avoid full cure of the ink in each main scan. The tentative cure may refer to a degree of cure that attains a high enough viscosity to prevent the ink dots in any contact are not merged.

The intense ultraviolet light source 214 is an ultraviolet light source used to complete the cure of the ink dots. This light source irradiates a more intense ultraviolet light than the ultraviolet light of the weak ultraviolet light source 212 for full cure of the ink dots. Completing the cure of the ink dots may refer to full cure of the ink dots by irradiating the ink dots with a cumulative quantity of ultraviolet light greater than a preset quantity depending on a demanded printing or shaping precision. The intense ultraviolet light sources 214, by further irradiating a region already irradiated in each main scan with the ultraviolet light from the weak ultraviolet light source 212 with the ultraviolet light, complete the cure of the ink dots.

As illustrated in the drawing, the weak ultraviolet light sources 212 of the ultraviolet irradiating units 204 may be disposed at positions along the ink jet heads 202 in the main scanning direction in a manner that their positions in the sub scanning direction are coincident with the positions of the nozzles 302 in the ink jet head 202. Thus disposing the ultraviolet sources may ensure tentative cure of the ink dots in each main scan.

The intense ultraviolet light sources 214 may be disposed at positions displaced in the sub scanning direction from the nozzles 302 of the ink jet heads 202. The intense ultraviolet light sources 214 thus disposed irradiate the ink dots formed by a main scan at different positions with the ultraviolet light at a timing of performing another main scan that follows a sub scan subsequent to the main scan that formed the ink dots. This may successfully finish full cure of the ink dots after being adequately flattened. Further advantageously, the occurrence of banding streaks, such as streak-like irregularity, may be effectively controlled.

The operation modes of the three-dimensional object shaping apparatus 10 according to this example are hereinafter described in further detail. According to this example, the three-dimensional object shaping apparatus 10 are operable in the two-dimensional printing mode, object shaping mode, raised printing mode, and three-dimensional object decorative printing mode. Specifically, this apparatus may operate as described referring to FIGs. 1 to 7 in the two-dimensional printing mode and the object shaping mode. This apparatus may operate as described below in the raised printing mode and the three-dimensional object decorative printing mode.

FIGs. 8A to 8C are explanatory drawings of the raised printing mode and the three-dimensional object decorative printing mode. FIGs. 8A and 8B are explanatory drawings of the raised printing mode. The three-dimensional object shaping apparatus 10, when operating in the raised printing mode, discharges the ink droplets from the head unit 12 (see FIGs. 1A to 1C) onto the medium 60 having a flat print surface to form bulging portions 62 on at least a part of the medium 60.

FIG. 8A is an upper view of an example of the medium 60 with the bulging portions 62 formed thereon. FIG. 8B is a sectional view of an example of the medium 60 with the bulging portions 62 formed thereon. When the apparatus is operating in the raised printing mode, the bulging portions 62 are printed and formed on the flat medium 60 so that the flat medium 60 appears to be partly bowed outward. A typical example of the bulging portions may be characters and/or patterns printed on the three-dimensional object 50 so as to rise upward from its surface.

The raised printing stacks the ink layers on one another to form the bulging portions 62. To ensure high precision in the formation of the bulging portions 62, the ink droplets may be desirably fired with high precision to land on end parts of the ink layers constituting the bulging portions 62 (for example, front-end side and rear-end side in the main scanning direction). To this end, the moving speed of the head unit 12 during the main scan when the apparatus is operating in the raised printing mode may be preferably lower than the moving speed when operating in the two-dimensional printing mode. When the apparatus is set to be in the raised printing mode, the main scan driver 14 (see FIGs. 1A to 1C) may preferably regulate the moving speed at least at a certain timing in the main scanning direction to a third speed lower than the first speed of the two-dimensional printing mode and prompts the head unit 12 to perform the main scan at the third speed.

According to this aspect, when the apparatus is set to be in the raised printing mode, the moving speed of the head unit 12 may be decelerated to a speed low enough for a degree of precision required to form the end parts of the ink layers constituting the bulging portions 62. This may enable high-precision raised printing to be appropriately performed. According to this example, one three-dimensional object shaping apparatus 10 may be capable of the raised printing as well as the two-dimensional image printing and three-dimensional object shaping.

When the apparatus is set to be in the raised printing mode, the main scan driver 14 may regulate the moving speed of the head unit 12 suitably for a degree of precision required to form the end parts of the ink layers. The moving speed of the head unit 12 throughout each main scan may be regulated to stay at the third speed. This may enable the moving speed of the head unit to be regulated more easily and appropriately. When the apparatus is set to be in the raised printing mode, the main scan driver may decelerate the moving speed of the head unit to a lower speed only at a certain timing during the main scan. The main scan driver may regulate the moving speed in the main scanning direction to the third speed at least at a timing of forming an end part on one side of the ink layer in the main scanning direction formed by each main scan.

When the apparatus is set to be in the raised printing mode, the YMCK inks may be usable in the head unit 12 as well as in the two-dimensional printing mode. This may provide the colored bulging portions 62.

FIG. 8C is an explanatory drawing of the three-dimensional object decorative printing mode, illustrating a three-dimensional medium 70 which is a print target of the apparatus operating in the three-dimensional object decorative printing mode. The three-dimensional medium 70 is a medium with unevenness on its print surface. The print surface of the three-dimensional medium 70 is a surface of this medium facing the head unit 12.

According to this example, the three-dimensional object shaping apparatus 10 is not only applicable to the medium 60 having a flat print surface but is also operable to print an object on the variously shaped three-dimensional media 70 during the three-dimensional object decorative printing mode. Accordingly, one three-dimensional object shaping apparatus 10 may also be operable to favorably decorate a three-dimensional object.

When the apparatus is operating in the three-dimensional object decorative printing mode, a gap length representing a distance between the print surface of the three-dimensional medium 70 and the head unit 12 may be variable at different positions on the print surface. This may cause the gap length to increase in some regions on the print surface. In the inkjet printing, the gap length too large may more likely to displace the ink droplet landing positions. When the gap length increases at least at a part of positions during the operation in, for example, the three-dimensional object decorative printing mode, other conditions may be adjusted to desirably minimize any displacement of the ink droplet landing positions.

An example of such conditions to be adjusted may include decelerating the moving speed of the head unit 12 during the main scan when the apparatus is set to be in the three-dimensional object decorative printing mode. To decelerate the moving speed, the main scan driver 14 may change the moving speed at which the head unit is moved in the main scanning direction during the main scan in accordance with the gap length at each position on the print surface of the three-dimensional medium 70. The moving speed of the head unit 12 during the main scan may be accordingly changeable suitably for the gap length. This may allow the ink droplets to land at the target positions with high precision in any parts where the gap length increases on the print surface of the three-dimensional medium 70.

The moving speed of the head unit 12 may be preferably regulated to a lower speed with a larger gap length. As an alternative way to change the moving speed of the head unit, a speed suitable for the gap length may be selected from a plurality of preset multiple speeds.

As for the moving speed control of the head unit 12, the moving speed of the head unit 12 may be decided based on a position at which the gap length marks a peak value. When the apparatus is set to be in the three-dimensional object decorative printing mode, the controller 18 (see FIGs. 1A to 1C) may change the moving speed at which the head unit 12 is moved in the main scanning direction during the main scan based on a peak value of the gap length. This may effectively prevent the ink droplet landing positions from being displaced from a position on the print surface of the three-dimensional medium 70 at which a peak gap length is marked. This may allow the ink droplets to land at the positions with high precision in any part of the print surface of the three-dimensional medium 70 having a large gap length.

Specifically, when the apparatus is set to be in the three-dimensional object decorative printing mode, the main scan driver 14 may regulate the moving speed in the main scanning direction to a fourth speed lower than the first speed of the two-dimensional printing mode and prompts the head unit 12 to perform the main scan at the fourth speed. The fourth speed may be decided based on a gap length peak value on the print surface of the three-dimensional medium 70.

When the apparatus is set to be in the three-dimensional object decorative printing mode, the YMCK inks may be usable in the head unit 12 as well as in the two-dimensional printing mode. Then, the three-dimensional medium 70 may be favorably decorated with the color inks. According to this example, one three-dimensional object shaping apparatus 10 may be capable of decorating a three-dimensional object, in addition to the raised printing, two-dimensional image printing, and three-dimensional object shaping.

According to this example described so far that uses the head unit 12 having the ink jet heads 202 displaced in the sub scanning direction, a resolution (for example, 600 dpi) higher than the nozzle pitch p (for example, distance corresponding to 150 dpi) in each ink jet head 202 may be effectuated as a possibly highest resolution attainable in the head unit 12. By using the head unit 12 thus advantageous, one three-dimensional object shaping apparatus 10 may be operable in the different operation modes including the two-dimensional printing mode, object shaping mode, raised printing mode, and three-dimensional object decorative printing mode.

Further, the head unit 12 thus advantageous may allow the apparatus to more appropriately operable in the different operation modes than similarly operated with the conventional head unit. By regulating the moving speed of the head unit 12 during the main scan in accordance with characteristics of the operation modes, the apparatus may be more suitably operable in the different operation modes.

Specifically, when the apparatus is operating in the two-dimensional printing mode, using the head unit 12 according to this example may prevent the ink dots from continuing into one another in the main scanning direction. This may greatly reduce the likelihood of streak-like irregularity, allowing the printing operation to be performed with higher quality.

When the apparatus is operating in the two-dimensional printing mode, the gap length may result in a constant narrow distance in printed and non-printed parts. The printed part may be a target part where the ink droplets are to be discharged in a region which the head unit 12 passes through during each main scan. The non-printed part may be any part but the printed part in the region which the head unit 12 passes through during each main scan. During the two-dimensional printing mode, a printing precision required when the printing starts, which is a timing of starting to discharge the ink droplets in the main scan, may be substantially equal in any parts. Accordingly, any special control when the printing starts may be dispensed with.

When the apparatus is operating in the two-dimensional printing mode, the moving speed of the head unit 12 during the main scan may be regulated to a constant high speed as with the prior art. Accordingly, high-quality printing may be achievable without decelerating the printing speed as compared to the prior art.

When the apparatus is operating in the object shaping mode, using the head unit 12 according to this example may suitably allow for control of the occurrence of streak-like irregularity and flattening of the ink layers formed by the additive manufacturing method. Accordingly, higher precision may be attainable during the shaping of a three-dimensional object.

Using the head unit 12 according to this example may allow for shaping each ink layer in one pass, achieving a markedly higher shaping speed.

Specifically, the three-dimensional object shaping apparatus 10 according to this example with the aligned four ink jet heads 202 may achieve approximately a four times higher speed, at most, than the printing speeds of the known three-dimensional object shaping apparatuses. Assuming that the multi-pass object shaping is employed to equalize the discharge properties of the ink jet heads, approximately a 16 times higher speed may be achievable as compared to the prior art. According to this example, therefore, the shaping speed may be approximately 4 to 16 times higher than the printing speeds of the known three-dimensional object shaping apparatuses.

When the apparatus is operating in the object shaping mode, the gap length in the printed part may result in a constantly narrow distance, whereas the gap length in the non-printed part may be variable ranging from wide to narrow dimensions. To form the end parts of the ink layers with high precision, high precision is necessary when the printing starts.

This example regulates the moving speed of the head unit 12 to a lower speed at least at a timing of forming an end part area (front and rear ends) of the ink layer in accordance with a degree of precision required to form the front and rear ends. Specifically, the main scan may be performed at a low speed to the entire surface. This may allow the ink layers to be formed with high precision. Further advantageously, a three-dimensional object may be shaped with high precision. The moving speed of the head unit 12 lower than the moving speed of the two-dimensional printing mode may still be as high as the printing speeds of the known three-dimensional object shaping apparatuses. Therefore, regulating the moving speed of the head unit 12 does not lead to a lower shaping speed than in the known three-dimensional object shaping apparatuses. According to this example, therefore, the shaping of a three-dimensional object may be more speedily performed with higher precision as compared to the known three-dimensional object shaping apparatuses.

As described earlier, the moving speed of the head unit 12 may be selectively decelerated only at timings of forming the front and rear ends of the ink layers. This may provide an even higher shaping speed.

When the apparatus is operating in the raised printing mode, using the head unit 12 according to this example may allow the bulging portions representing the characters or the like to be shaped at a significantly higher speed than the prior art, similarly to an improved speed of the object shaping mode (for example, at most 4 to 16 times higher speeds). When, for example, a color image is printed on the bulging portion, a continuity of ink dots in the main scanning direction is unlikely, similarly to the operation during the two-dimensional printing mode. This may greatly reduce the likelihood of streak-like irregularity, allowing the printing operation to be performed with higher quality. This example, therefore, may more suitably facilitate the raised printing as compared to the prior art.

When the apparatus is operating in the raised printing mode, the gap length may be regulated to a constant distance as narrow as possible in the printed part. In the non-printed part, on the other hand, the gap length may be variable in slightly wider dimensions. To form the end parts of the ink layers with high precision, high precision is necessary when the printing starts.

According to this example, the moving speed of the head unit 12 during the raised printing mode may be regulated, identically or similarly to the object shaping mode, to a lower speed at least at timings of forming the end parts of the ink layers constituting the bulging portions (front and rear ends) in accordance with a degree of precision required to form the front and rear ends. In this instance, the main scan may be performed at a low speed to the entire surface. This may allow the ink layers to be formed with high precision and accordingly allow the bulging portions to be formed with high precision. The moving speed of the head unit 12 lower than the moving speed during the two-dimensional printing mode may still be as high as the printing speeds of the known three-dimensional object shaping apparatuses. This example, therefore, may allow the raised printing to be more speedily performed with higher precision. As described in connection with the object shaping mode, the moving speed of the head unit 12 may be selectively decelerated only at timings of forming the front and rear ends of the ink layers.

Specifically, when the apparatus is operating in the three-dimensional object decorative printing mode, using the head unit 12 according to this example may prevent the ink dots from continuing into one another in the main scanning direction, similarly to the operation during the two-dimensional printing mode. This may greatly reduce the likelihood of streak-like irregularity, allowing the printing operation to be performed with higher quality.

During the operation in the three-dimensional object decorative printing mode, the gap length in the printed part may be variable depending on a degree of unevenness of the print surface, whereas the gap length in the non-print portion may be variable ranging from wide to narrow dimensions. In order for the ink droplets to land at the target positions with high precision in the presence of any large gap length, high precision is necessary when the printing starts.

According to this example, during the operation in the three-dimensional object decorative printing mode, the moving speed of the head unit 12 during the main scan may be regulated based on a peak value of the gap length to perform the main scan to the entire surface at a low speed. The moving speed of the head unit 12, when thus regulated based on a required degree of precision suitable for the gap length, may not be decelerated more than necessary. This may enable the three-dimensional medium to be appropriately printed with high precision. The moving speed of the head unit 12 may be subject to variable speed control depending on the gap length at each position on the print surface.

By regulating the moving speed of the head unit 12 during the main scan to speeds suitable for characteristics of the respective operation modes, the apparatus may be more suitably operable in the different operation modes. As described so far, the moving speed of the head unit 12 may be regulated by, for example, keeping a constant moving speed during each main scan (hereinafter, variable speed control 1) or by changing the moving speed at a certain timing during one main scan (hereinafter, variable speed control 2).

When the moving speed is changed by the variable speed control 1, the moving speed of the head unit 12 during the two-dimensional printing mode may be regulated to stay at a constant high speed. During the object shaping mode and the raised printing mode, the moving speed of the head unit 12 may be regulated in accordance with a degree of precision required at timings of forming the end parts of the ink layers to move the head unit 12 at the regulated moving speed throughout each main scan. During the operation in the three-dimensional object decorative printing mode, the moving speed of the head unit 12 may be regulated based on a peak value of the gap length to move the head unit 12 at the regulated moving speed throughout each main scan. This may appropriately regulate the moving speed of the head unit 12 during the main scan to speeds suitable for characteristics of the operation modes without unnecessarily overcomplicating the speed control.

When the moving speed is changed by the variable speed control 2, the moving speed of the head unit 12 during the two-dimensional printing mode may be regulated to stay at a constant high speed, similarly to the variable speed control 1. During the object shaping mode and the raised printing mode, the moving speed of the head unit 12 may be regulated to a lower speed in accordance with a required degree of precision at a certain timing, for example, timings of forming the end parts of the ink layers. At any other timings, the moving speed of the head unit 12 may be accelerated. During the three-dimensional object decorative printing mode, the moving speed of the head unit 12 may be variable depending on the gap length at each position. By thus decelerating the moving speed of the head unit 12 only at any timing necessary, the operations during the respective operation modes may be accelerated.

The three-dimensional object shaping apparatus 10, through at least one of the variable speed controls 1 and 2, may be more suitably carry out the operations in the operation modes. Accordingly, one three-dimensional object shaping apparatus 10 may be operable more effectively in various operation modes, for example, by way of a user's selection.

The three-dimensional object shaping apparatus 10 may be configured to carry out the variable speed controls 1 and 2 both. Optionally, either one of the variable speed controls 1 and 2 may be selectively carried out in response to a user's instruction.

Next, various modified examples of the head unit 12 are hereinafter described. FIGs. 9 to 12 illustrate the modified examples of the head unit 12.

For the sake of simple illustration, the ink jet heads 202 of the head unit 12 alone are illustrated in FIGs. 9 to 12. According to the modified examples hereinafter described, the head unit 12 may further has ultraviolet irradiating units as illustrated in FIGs. 7A to 7B and other drawings. The structural elements illustrated in FIGs. 9 to 12 with the same reference numerals as illustrated in FIGs. 1 to 8 may be identical or similar to the ones in FIGs. 1 to 8 in any aspects but those described below.

FIGs. 9A to 9B are drawings of a modified example of the head unit 12. FIG. 9A is a drawing of an exemplified operation during the two-dimensional printing mode according to the modified example, wherein an exemplified disposition of the ink jet heads 202 is illustrated on the left, while an exemplified arrangement of the ink dots 402y to 402k formed by one main scan is illustrated on the right. FIG. 9B is a drawing of an exemplified operation during the object shaping mode according to the modified example, wherein an exemplified disposition of the ink jet heads 202 is illustrated on the left, while an exemplified arrangement of the ink dots 402y to 402k formed by one main scan is illustrated on the right.

According to this modified example, the head unit 12 has some of the ink jet heads 202 repositioned as compared to the head unit 12 illustrated in FIGs. 2B, 7, and other drawings. Specifically, positions the M-color and Y-color ink jet head 202 for use in the two-dimensional printing mode are exchanged in the head unit 12 illustrated in FIGs. 9A to 9B in contrast to the head unit 12 illustrated in FIG. 2B.

During the operation in the two-dimensional printing mode, timings of discharging the ink droplets may be suitably decided depending on how the ink jet heads 202 are disposed as illustrated on the right in FIG. 9A. Then, the apparatus may be favorably operable during the two-dimensional printing mode. This example, in the same manner as described referring to FIGs. 1 to 8, may prevent the different color ink dots from continuing into one another in the main scanning direction, suitably controlling the occurrence of streak-like irregularity. As known from the arrangement of the dots 402y to 402k illustrated in the drawing, a continuity of ink dots in the main scanning direction may be unlikely as compared to the examples described referring to FIGs. 1 to 8. This example, therefore, may markedly improve the printing operation in quality during the two-dimensional printing mode.

During the operation in the object shaping mode, the shaping ink is used in the ink jet heads 202, and the ink droplets are discharged at a preset shaping resolution (for example, 600×600 dpi) by each main scan as illustrated in FIG. 9B. According to this modified example thus characterized, the one-pass object shaping may be appropriately performed during the object shaping mode. This may enable high-speed object shaping.

In the same manner as described referring to FIGs. 1 to 8, a continuity of ink dots may occur in the main and sub scanning directions both, suitably controlling the occurrence of streak-like irregularity in the main scanning direction. Further advantageously, adverse effects resulting from the variability of nozzle discharge properties may also be effectively controlled. This modified example may enable three-dimensional object shaping with high precision during the object shaping mode.

In this and other modified examples, though not described in detail, the operations during the raised printing mode and the three-dimensional object decorative printing mode may be appropriately performed by adjusting the ink droplet discharge timings depending on how the ink jet heads 202 are disposed, identically or similarly to the examples described referring to FIGs. 1 to 8. Whenever the need arises, the shaping operation during the object shaping mode may be performed in multiple passes. Instead of actually repositioning the ink jet heads 202, the ink jet heads 202 may be virtually repositioned by adjusting the ink droplet discharge timings to form the dots 402y to 402k next to one another as illustrated on the right in FIGs. 9A to 9B.

FIGs. 10A to 10B are drawings of another modified example of the head unit 12. FIG. 10A is a drawing of an exemplified disposition of the ink jet heads 202 according to the modified example.

According to this example, the head unit 12 has a plurality of ink jet heads 202 displaced from one another in the sub scanning direction respectively for a plurality of color inks used in the two-dimensional printing mode. The ink jet heads 202 for different colors may be displaced from one another in the sub scanning direction identically or similarly to the ink jet heads 202 of the head unit 12 illustrated in FIGs. 2B and 7. Specifically, the ink jet heads 202 according to this example may each have a nozzle array 304 in which a plurality of nozzles 302 are spaced at the pitch p (for example, 150 dpi) lager than a distance (for example, 1/600 inches) corresponding to a printing resolution (for example, 600 dpi). The ink jet heads 202 may be disposed next to one another with their positions being displaced in the sub scanning direction by a distance corresponding to a printing resolution.

On the left of FIG. 10A are illustrated exemplified ink jet heads 202 for one color of the head unit 12 according to this modified example. In the whole head unit 12, there are four ink jet heads 202 for each one of the YMCK colors, which are 16 ink jet heads 202 in total.

On the right of FIG. 10A is illustrated an exemplified arrangement of ink dots (arrangement of fired ink dots) formed in one main scan by the ink jet heads 202 for one color. Specifically, FIG. 10A illustrates on its right an exemplified arrangement of ink dots formed in the main scan of a first pass, provided that the number of printing passes is four and four ink jet heads 202 are used for each color. The nozzles 302 form in the main scan plural ink dots spaced at the intervals of q equal to the nozzle pitch p and aligned in the main scanning direction.

FIG. 10B is a drawing of an exemplified arrangement of ink dots subsequent to four main scans performed correspondingly to the number of printing passes. According to this modified example, by employing the four-pass printing during the two-dimensional printing mode, the printing may be appropriately performed by the ink jet heads 202 for different colors at a high resolution (for example, 600×600 dpi) corresponding to a shorter distance than the nozzle pitch p in each of the ink jet heads 202. This may effectively prevent the ink dots of different colors from being formed in the main scanning direction during the operation in the two-dimensional printing mode. Further advantageously, the occurrence of streak-like irregularity may be effectively controlled.

By using multiple ink jet heads 202 for each color, one main scan may be comparable to the multi-pass operation with one ink jet head 202 for one color. When four ink jet heads 202 are used for each color as illustrated in the drawing, therefore, using four passes may enable high-quality printing comparable to 16-pass printing with one ink jet head 202 for one color.

Further advantageously, ends of the nozzle arrays 304 in the ink jet heads 202 may be non-collinear with one another in the main scanning direction. Additionally, adverse effects resulting from the ends of the nozzle arrays 304 are unlikely as compared to the collinear disposition of the end nozzles in the nozzle arrays 304 in the main scanning direction. This may also be an advantage that reduces the likelihood of banding streaks.

During the object shaping mode, using multiple ink jet head 202 may advantageously enable high-speed object shaping. This modified example, therefore, may allow the printing operation to be more speedily performed with higher precision.

Any other aspects may be effectuated as exactly as or similarly to the examples described referring to FIGs. 1 to 9. The operations during the other operation modes may be appropriately effectuated as exactly as or similarly to the examples described referring to FIGs. 1 to 9. For example, the ultraviolet irradiating units 204 identical or similar to the example illustrated in FIGs. 7A to 7B may be used with the head unit 12, wherein the ink dots may be tentatively cured by the weak ultraviolet light sources 212 adjacent to the ink jet heads 202 and then fully cured by the intense ultraviolet light sources 214. This may more effectively prevent the occurrence of banding streaks.

FIGs. 11A to 11B are drawings of yet another modified example of the head unit 12. FIG. 11A is an exemplified disposition of the ink jet heads 202 according to the modified example. FIG. 11B is an exemplified arrangement of ink dots subsequent to four main scans performed correspondingly to the number of printing passes. Any structural elements and features according to this modified example but the ones hereinafter described may be identical or similar to those described referring to FIGs. 10A to 10B.

According to this example, the head unit 12 has a plurality of ink jet heads 202 displaced from one another in the sub scanning direction respectively for a plurality of color inks used in the two-dimensional printing mode. In the whole head unit 12, there are four ink jet heads 202 for each one of the YMCK colors, which are 16 ink jet heads 202 in total. On the right of FIG. 11A is illustrated an exemplified arrangement of ink dots formed in one main scan by the multiple (four) ink jet heads 202 for one color.

Comparing this modified example to the modified example described referring to FIGs. 10A to 10B, the ink jet heads 202 for different colors are partly repositioned. Specifically, FIG. 11A, as compared to the disposition of the ink jet heads 202 illustrated in FIG. 10A, of the ink jet heads 202, positions of the second and third ones from right are exchanged.

This disposition may attain operational effects similar to the modified example described referring to FIGs. 10A to 10B. For example, the ink dots of different colors may be prevented from being formed in the main scanning direction during the operation in the two-dimensional printing mode. Further advantageously, the occurrence of streak-like irregularity may be effectively controlled.

By using multiple ink jet heads 202 for each color, one main scan may be comparable to the multi-pass operation with one ink jet head 202 for one color. This may also enable high-quality printing comparable to 16-pass printing in which one ink jet head 202 is used for one color. Further advantageously, ends of the nozzle arrays 304 in the ink jet heads 202 are non-collinear with one another in the main scanning direction. Besides this aspect, ends of the nozzle arrays 304 are disposed in a zig-zag manner. This may also be an advantage that reduces the likelihood of banding streaks. This modified example, therefore, may allow the printing operation during the object shaping mode to be more speedily performed with higher precision.

FIGs. 12A to 12B are drawings of yet another modified example of the head unit 12. FIG. 12A is an exemplified disposition of the ink jet heads 202 according to the modified example. FIG. 12B is an exemplified arrangement of ink dots subsequent to four main scans performed correspondingly to the number of printing passes. Any structural elements and features according to this modified example but the ones hereinafter described may be identical or similar to those described referring to FIGs. 10 and 11.

According to this example, the head unit 12 has a plurality of ink jet heads 202 displaced from one another in the sub scanning direction respectively for a plurality of color inks used in the two-dimensional printing mode. In the whole head unit 12, there are four ink jet heads 202 for each one of the YMCK colors, which are 16 ink jet heads 202 in total. On the right of FIG. 11A is illustrated an exemplified arrangement of ink dots formed in one main scan by the multiple (four) ink jet heads 202 for one color.

Comparing this modified example to the modified example described referring to FIGs. 10 and 11, the positional displacement is increased in the sub scanning direction between the ink jet heads 202 for different colors adjacently disposed in the main scanning direction. Specifically, FIG. 12A, as compared to the disposition of the ink jet heads 202 illustrated in FIG. 11A, of the ink jet heads 202, positions of the second and third ones from right are further displaced by a distance equal to the nozzle pitch p downward on the drawing in the sub scanning direction. The displacement in the sub scanning direction between the third and fourth ink jet heads 202 may be equal to a distance Lx illustrated in the drawing.

This disposition may attain operational effects similar to the modified example described referring to FIGs. 10A to 10B. For example, the ink dots of different colors may be prevented from being formed in the main scanning direction during the operation in the two-dimensional printing mode. Further advantageously, the occurrence of streak-like irregularity may be effectively controlled.

By using multiple ink jet heads 202 for each color, one main scan may be comparable to the multi-pass operation with one ink jet head 202 for one color. This may also enable high-quality printing comparable to 16-pass printing in which one ink jet head 202 is used for one color. In this instance, ends of the nozzle arrays 304 in the ink jet heads 202, instead of being disposed collinearly with one another in the main scanning direction, are disposed in a zig-zag manner. This may also be an advantage that reduces the likelihood of banding streaks. This modified example, therefore, may allow the printing operation during the object shaping mode to be more speedily performed with higher precision.

According to this modified example, by increasing the positional displacement in the sub scanning direction between the ink jet heads 202 adjacently disposed in the main scanning direction, adverse effects resulting from the ends of the nozzle arrays 304 may be visually dispersed. This may more effectively reduces the likelihood of banding streaks.

In order to visually disperse the adverse effects resulting from the ends of the nozzle arrays 304, the positional displacement in the sub scanning direction between the ink jet heads 202 adjacently disposed in the main scanning direction may be preferably larger than a distance corresponding to a spatial frequency at which the human visual sensitivity is maximized. Specifically, the positional displacement may be preferably greater than or equal to 200 µm, wherein the number of ink jet heads 202 or nozzle arrays for one color may be preferably greater than or equal to four. This may help to disperse adverse effects resulting from the ends of the nozzle arrays 304.

Further modifications are possible with the various structural and technical features of the head unit 12 described so far. In the described examples, ink droplets of one object shaping ink are discharged from all of the ink jet heads of the head unit 12 during the object shaping mode. According to yet another modified example of the head unit 12, ink droplets of any ink but the object shaping ink may be discharged from a part of the nozzle arrays of the ink jet heads in the head unit 12. When support layers that circumferentially support the three-dimensional object 50 are formed during the shaping of the object 50, the head unit 12 may further have an ink jet head(s) that discharges ink droplets used as the support layer material.

According to yet another modified example, the head unit 12 may have a plurality of sets of the ink jet heads 202 according to the described examples. Specifically, the head unit 12 may have two sets of the ink jet heads 202, each set containing four ink jet heads 202, as illustrated in FIGs. 2B and 7. Then, this head unit 12 has eight ink jet heads 202 in total.

When the apparatus is operating in the two-dimensional printing mode, the YMCK color inks may be used in one of the two sets of four ink jet heads 202 identically or similarly to the examples described referring to FIGs. 2B and 7. Any color inks but the YMCK color inks may be used in the other set of four ink jet heads 202. Specifically, inks of Lm, Lc, and Lk colors, which are pale (light) colors of the M, C, and K colors, and a clear color ink (Cl color) may be usable in the other set of four ink jet heads 202. Instead, R (red), G (green), and B (blue) color inks and a spot color (S color) ink may be usable in the other set of four ink jet heads 202, in which case a white color (W color) ink and/or a clear ink may be usable as the spot color ink. Alternatively, a white color ink and three spot color inks may be usable in the other set of four ink jet heads 202. Using such various inks may provide a two-dimensional image painted with a broader range of colors.

When the apparatus is operating in the object shaping mode, the object shaping ink may be used in one of the two sets of four ink jet heads 202, while the YMCK color inks may be used in other set of four ink jet heads 202. Examples of the object shaping ink may include an ink for exclusive use in object shaping, a white color ink, and a clear ink. In this manner, an object may be shaped and colored simultaneously to provide a favorable colored object. For any objects that necessitate the formation of support layers, it may be preferable to provide at least a set of ink jet heads for support ink. The ink jet head for support ink may refer to an ink jet head having a nozzle array from which ink droplets of the support ink used as the support layer material are dischargeable.

When the apparatus is operating in the raised printing mode, a clear ink may be used in one of the two sets of four ink jet heads 202, while the YMCK color inks may be used in other set of four ink jet heads 202. In addition to the clear ink, the white color ink may also be used in one set of four ink jet heads 202, in which case the clear ink may be used in two of the ink jet heads 202, and the white color ink may be used in the other two ink jet heads 202. Accordingly, the bulging portions may be formed with the clear ink or the white color ink, and their surfaces may be colored with the YMCK inks. This may provide colorless interiors of the bulging portions constituting the background of the colored surfaces. This may enable the coloring operation to be more appropriately performed during the raised printing.

When the apparatus is operating in the three-dimensional object decorative printing mode, the YMCK inks used in the two-dimensional printing mode may be similarly usable in the head unit 12. Then, the three-dimensional medium may be favorably decorated with a broader range of colors.

In the description given so far, the ink of ultraviolet curing type is used in the operations during the respective operation modes. Possibly, other inks, instead of the ink of ultraviolet curing type, may be usable as the object shaping or printing ink. Specific examples of the usable inks may include a variety of inks for use in stacking multiple ink layers to form an object, for example, solvent-diluted UV curable inks (solvent UV inks) which are solvent-diluted inks of ultraviolet curing type, latex inks, and precolored resin- dispersed aqueous inks.

Thus far was described the embodiment of this disclosure. However, the technical scope of this disclosure is not necessarily limited to the described embodiment. Those skilled in the art should obviously understand that the embodiment may be subject to various modifications or improvements. As is clearly understood from the appended claims, such modifications or improvements are naturally included in the technical scope of this disclosure.

This disclosure may be suitably applicable to three-dimensional object shaping apparatuses.

## Claims

1. A liquid discharge apparatus configured to discharge ink droplets by ink-jet technique, comprising:
a head unit having a plurality of nozzle arrays from which the ink droplets are dischargeable by ink-jet technique;
a main scan driver that prompts the head unit to perform a main scan in which the ink droplets are discharged while the head unit is moving in a predetermined main scanning direction; and
a controller configured to control the operations of the head unit and the main scan driver, wherein
the plurality of nozzle arrays each have a plurality of nozzles aligned in a nozzle array direction intersecting with the main scanning direction,
the plurality of nozzle arrays are disposed next to one another in the main scanning direction in a manner that positions thereof at least partly overlap in an orthogonal direction orthogonal to the main scanning direction,
positions of the nozzles in each of the nozzle arrays differ in the orthogonal direction from positions of the nozzles in the other nozzle arrays,
the controller is further configured to set, as operation modes of the liquid discharge apparatus, at least a two-dimensional printing mode for printing an image on a flat print surface and an object shaping mode for shaping a three-dimensional object using an additive manufacturing method,
the main scan driver regulates a moving speed in the main scanning direction to a preset first speed and prompts the head unit to perform the main scan at the first speed when the apparatus is set to be in the two-dimensional printing mode, and
the main scan driver regulates the moving speed in the main scanning direction at least at a certain timing to a second speed lower than the first speed and prompts the head unit to perform the main scan at the second speed when the apparatus is set to be in the object shaping mode.

2. The liquid discharge apparatus according to claim 1, wherein, when the apparatus is set to be in the object shaping mode, the main scan driver regulates the moving speed in the main scanning direction to the second speed at least at a timing of forming an end part on one side of the ink layer in the main scanning direction formed by each main scan.

3. The liquid discharge apparatus according to claim 1, wherein, when the apparatus is set to be in the object shaping mode, the main scanning driver regulates the moving speed of the head unit in each main scan to stay at the constant second speed.

4. The liquid discharge apparatus according to any one of claims 1 to 3, wherein the plurality of nozzle arrays each discharge ink droplets of an ink of ultraviolet curing type curable by being irradiated with ultraviolet light.

5. The liquid discharge apparatus according to any one of claims 1 to 4, wherein
the plurality of nozzles in the plurality of nozzle arrays are spaced at constant intervals of p in the orthogonal direction, and
the plurality of nozzle arrays are disposed next to one another in the main scanning direction so that a positional displacement in the orthogonal direction between end nozzles in adjacent ones of the nozzle arrays is represented by a distance equal to an integral multiple of p/n (n is an integral number greater than or equal to 2) but is unequal to an integral multiple of p.

6. The liquid discharge apparatus according to any one of claims 1 to 5, wherein
the controller is configured to further set, as the operation mode of the liquid discharge apparatus, a raised printing mode for forming a bulging portion in at least a part of a medium by discharging the ink droplets from the head unit on the medium, and
the main scan driver regulates the moving speed in the main scanning direction at least at a certain timing to a third speed lower than the first speed and prompts the head unit to perform the main scan at the third speed when the apparatus is set to be in the raised printing mode.

7. The liquid discharge apparatus according to any one of claims 1 to 6, wherein the controller is configured to further set, as the operation mode of the liquid discharge apparatus, a three-dimensional object decorative printing mode for printing an image on a three-dimensional medium with unevenness on a print surface thereof.

8. The liquid discharge apparatus according to claim 7, wherein, when the apparatus is set to be in the three-dimensional object decorative printing mode, the main scan driver changes the moving speed at which the head unit is moved in the main scanning direction during the main scan in accordance with a distance between the head unit and each position on the print surface of the three-dimensional medium.

9. The liquid discharge apparatus according to claim 7, wherein, when the apparatus is set to be in the three-dimensional object decorative printing mode, the main scan driver changes the moving speed at which the head unit is moved in the main scanning direction during the main scan based on a peak value of the distance between the head unit and each position on the print surface of the three-dimensional medium.

10. The liquid discharge apparatus according to any one of claims 1 to 9, wherein, when the apparatus is set to be in the object shaping mode, the head unit forms one ink layer by discharging in one main scan the ink droplets from the plurality of nozzle arrays.

11. The liquid discharge apparatus according to claim 10, wherein
in the one main scan, the nozzles in the plurality of nozzle arrays respectively discharge the ink droplets to different positions, and
the ink droplets are discharged from the plurality of nozzle arrays to all of target positions for the ink droplets to be discharged in order to form one ink layer in at least a region previously defined.

12. The liquid discharge apparatus according to any one of claims 1 to 9, wherein, when the apparatus is set to be in the object shaping mode, the head unit forms one ink layer by discharging in each of a plurality of main scans the ink droplets from the plurality of nozzle arrays.

13. The liquid discharge apparatus according to any one of claims 1 to 12, multi-pass printing is performed by means of the plurality of nozzle arrays when the apparatus is set to be in the two-dimensional printing mode.

14. The liquid discharge apparatus according to any one of claims 1 to 13, wherein the head unit has a plurality of nozzle arrays that respectively discharge ink droplets of an object shaping ink used as a material ink to form a three-dimensional object when the apparatus is set to be in the object shaping mode.

15. The liquid discharge apparatus according to any one of claims 1 to 14, wherein the head unit has a plurality of nozzle arrays that respectively discharge the ink droplets of a support ink used as a material ink to form support layers that circumferentially support a three-dimensional object currently being shaped when the apparatus is set to be in the object shaping mode.

16. A liquid discharge method for discharging ink droplets by ink-jet technique, comprising prompting a head unit having a plurality of nozzle arrays from which the ink droplets are dischargeable by ink-jet technique to perform a main scan in which the ink droplets are discharged while the head unit is moving in a predetermined main scanning direction, wherein
the plurality of nozzle arrays each have a plurality of nozzles aligned in a nozzle array direction intersecting with the main scanning direction,
the plurality of nozzle arrays are disposed next to one another in the main scanning direction in a manner that positions thereof at least partly overlap in an orthogonal direction orthogonal to the main scanning direction,
positions of the nozzles in each of the nozzle arrays differ in the orthogonal direction from positions of the nozzles in the other nozzle arrays,
the method further comprising:
setting one of operation modes when the head unit is prompted to perform the main scan, the operation modes including at least a two-dimensional printing mode for printing an image on a flat print surface and an object shaping mode for forming a three-dimensional object using an additive manufacturing method,
regulating a moving speed in the main scanning direction to a preset first speed and prompting the head unit to perform the main scan at the first speed when the apparatus is set to be in the two-dimensional printing mode, and
regulating the moving speed in the main scanning direction at least at a certain timing to a second speed lower than the first speed and prompting the head unit to perform the main scan at the second speed when the apparatus is set to be in the object shaping mode.
